# FASCICULE DE BREVET EUROPEEN

(11) **EP 2 499 484 B1**
(45) Date de publication et mention de la délivrance du brevet: **28.06.2017**
(21) Numéro de dépôt: 10773930.2
(22) Date de dépôt: 10.11.2010
(51) Int. Cl.: G01N 21/78, G01N 31/22, G01N 21/77

(54) **MATÉRIAU ET PROCÉDÉ POUR PIÉGER, DÉTECTER ET QUANTIFIER DES COMPOSÉS AROMATIQUES HÉTÉROCYCLIQUES ET AUTRES**
MATERIAL UND VERFAHREN ZUM ABFANGEN, NACHWEISEN UND QUANTIFIZIEREN VON AROMATISCHEN HETEROZYKLISCHEN VERBINDUNGEN UND ANDEREN
MATERIAL AND METHOD FOR TRAPPING, DETECTING AND QUANTIFYING AROMATIC HETEROCYCLIC COMPOUNDS AND OTHERS

(30) Priorité: 10.11.2009 FR 0957919
(43) Date de publication de la demande: 19.09.2012
(73) Titulaire: Commissariat à l'Énergie Atomique et aux Énergies Alternatives, 75015 Paris (FR); Centre National de la Recherche Scientifique, 75016 Paris (FR)
(72) Inventeur: CRUNAIRE, Sabine, F-59500 Douai (FR); TRAN-THI, Thu-Hoa, F-77310 Saint Fargeau-Ponthierry (FR)
(74) Mandataire: Ilgart, Jean-Christophe
(86) Numéro de dépôt international: PCT/EP2010/067227
(87) Numéro de publication internationale: WO 2011/058066

(56) Documents cités:
- WO-A1-2006/107370
- FR-A1- 2 890 745
- GOJON C ET AL: "A comparison of immobilization sol-gel methods for an optical chemical hydrazine sensor", SENSORS AND ACTUATORS B, ELSEVIER SEQUOIA S.A., LAUSANNE, CH LNKD- DOI:10.1016/S0925-4005(97)80186-4, vol. 38, no. 1-3, 1 janvier 1997 (1997-01-01), pages 154-162, XP004083686, ISSN: 0925-4005
- INGERSOLL ET AL.: "USING SOL-GEL-BASED PLATFORMS FOR CHEMICAL SENSORS", CHEMTECH, WASHINGTON, DC, US, vol. 27, no. 1, 1 janvier 1997 (1997-01-01), pages 26-31, XP002060846, ISSN: 0009-2703
- Christine Gojon ET AL: "PREPARATION PAR PROCEDE SOL-GEL ET EVALUATION DES PERFORMANCES ANALYTIQUES D'UN CAPTEUR CHIMIQUE SPECIFIQUE DE L'HYDRAZINEPREPARATION PAR PROCEDE SOL-GEL ET EVALUATION DES PERFORMANCES ANALYTIQUES D'UN CAPTEUR CHIMIQUE SPECIFIQUE DE L'HYDRAZINE", Fr9706015, 13 January 1996 (1996-01-13), pages 1-228, XP055198350, Retrieved from the Internet: URL:http://www.iaea.org/inis/collection/NC LCollectionStore/_Public/29/065/29065659.p df [retrieved on 2015-06-25]
- Muawia Salameh Alqasaimeh ET AL: "A Urea Biosensor from Stacked Sol-Gel Films with Immobilized Nile Blue Chromoionophore and Urease Enzyme", Sensors, 1 October 2007 (2007-10-01), pages 2251-2262, XP055198407, Basel DOI: 10.3390/s7102251 Retrieved from the Internet: URL:http://search.proquest.com/docview/153 7590071
- N. Miyake ET AL: "Evaluation of a Sol-Gel Derived Nafion/Silica Hybrid Membrane for Polymer Electrolyte Membrane Fuel Cell Applications: II. Methanol Uptake and Methanol Permeability", Journal of The Electrochemical Society, vol. 148, no. 8, 1 January 2001 (2001-01-01), page A905, XP055198510, ISSN: 0013-4651, DOI: 10.1149/1.1383072
- Erwin Maciak ET AL: "EFFECT OF HUMIDITY ON NH 3 GAS SENSITIVITY OF NAFION /WO 3 SENSING STRUCTURE OF SPR SENSOR", Molecular and Quantum Acoustics, 1 January 2005 (2005-01-01), page 205, XP055198511, Retrieved from the Internet: URL:http://mqa.ogpta.polsl.pl/files-articl es/26/pdf/205-215_Maciak_Opilski_Pustelny. pdf [retrieved on 2015-06-25]
- Jaafar Abdullah ET AL: "An Optical Biosensor based on Immobilization of Laccase and MBTH in Stacked Films for the Detection of Catechol.", Sensors, vol. 7, no. 10, 11 October 2007 (2007-10-11), pages 2238-2250, XP055198513, DOI: 10.3390/s7102238

## Description

### DOMAINE TECHNIQUE

La présente invention appartient au domaine de la détection et éventuellement de la quantification de composés d'intérêt tels que des composés aromatiques hétérocycliques.

Plus particulièrement, la présente invention propose un dispositif et un procédé aptes à détecter et éventuellement à quantifier des composés aromatiques hétérocycliques tels que l'indole et ses dérivés.

### ÉTAT DE LA TECHNIQUE ANTÉRIEURE

Les composés indoliques et plus particulièrement l'indole et le scatole peuvent être produits par des sources de différentes natures. La source la plus importante pour l'indole provient du développement de micro-organismes. En effet, au cours de leur croissance, les bactéries disposant de l'enzyme tryptophanase produisent dé l'indole à partir du tryptophane contenu dans un milieu nutritif. Ainsi, dans le domaine de la biochimie et de la microbiologie, la recherche de l'indole est un moyen bien connu pour établir une classification taxonomique des micro-organismes. Cette différentiation est importante, d'une part, d'un point de vue « épidémiologique » et, d'autre part, pour les différences de sensibilité aux antibiotiques des différentes souches bactériennes.

Dans le domaine de l'agro-alimentaire, la détection d'indole permet de déterminer la fraîcheur des produits de la mer (crevettes, coquillages, etc...). En effet, l'indole peut-être considéré comme un facteur indirect -indiquant la charge bactérienne des produits et, par conséquent, l'état d'avancement de leur décomposition. Dans ce même domaine, la détection d'indole est également importante pour la commercialisation de la viande notamment la viande de porc et de mouton. En effet, la viande peut présenter, dans certains cas, une forte odeur nauséabonde lors de la cuisson et empêcher la consommation. Cette odeur provient de l'indole et du scatole accumulés dans les tissus adipeux et dont l'odeur se révèle lors de l'élévation de température à la cuisson. La détection conjointe de l'indole et du scatole dans le lait ou la viande peuvent également servir de mode de traçage du type d'alimentation du bétail (herbe, concentré alimentaire). Par ailleurs, des études ont également montré que de fortes teneurs en indole dans la nourriture du bétail pouvaient être un facteur de déclenchement d'emphysème pulmonaire.

Dans le domaine du dépistage vétérinaire, la mise en évidence d'une grande quantité d'indole dans le lait de vache est une preuve suffisante que le sujet présente une mastite [1].

L'indole est également un composé actif utilisé dans certains pesticides comme odeur d'attrait identique à celle produite par les phéromones de certains insectes comme le chrysomèle des racines du maïs, les coléoptères, etc. Aussi, la détection d'indole doit pouvoir permettre d'effectuer un contrôle de la dose d'insecticide répandue et ce, dans le cadre d'un contrôle sanitaire et environnemental. Toujours dans le domaine du contrôle environnemental et plus particulièrement de la qualité des eaux usées provenant notamment d'élevages intensifs, d'industries cosmétiques ou d'industries chimiques, il est important de connaître la teneur en indole car celui-ci est extrêmement toxique pour les organismes aquatiques.

Dans le domaine du contrôle sanitaire, la détection de l'indole et du scatole peut présenter un intérêt pour la mise en évidence de la présence de certains types de champignons (*H*. *paupertinus, Tricholoma bufonium, T. inamoenum, T. lascivum, T. sulphureum, Boletus calopus,* etc.) [2]. Ceci pourrait par exemple permettre des classifications d'espèces comestibles ou vénéneuses, des détections de moisissures dans l'air intérieur, responsables de maladies pulmonaires et d'allergies ou encore des tests de maturations dans les fromageries, l'indole et le scatole étant trouvés dans des fromages comme la mozzarella, l'emmental, le fromage de Hervé ou le Limburger [3].

Enfin, dans les domaines de la parfumerie, des cosmétiques et des arômes, l'indole est utilisé à très faible concentration comme composant odorant (odeur fleurie, jasmin).

De ce qui précède, il est clair que la détection et l'éventuelle quantification de composés indoliques et plus particulièrement d'indole et de scatole pourraient être appliquées à de nombreux domaines.

L'état de la technique connaît déjà, d'une part, des méthodes colorimétriques pour l'analyse des dérivés de l'indole principalement en phase liquide et, d'autre part, des méthodes instrumentales qui sont plutôt dédiées à l'identification et à la quantification des dérivés de l'indole en phase gazeuse mais qui nécessitent des étapes fastidieuses de purification et de préparation des échantillons.

Concernant les méthodes colorimétriques, on utilise souvent le p-diméthylaminobenzaldéhyde (DMABA ou DAB) et le p-diméthylaminocinnamaldéhyde (DMACA) comme réactifs sensibles pour la détection de l'indole, du scatole, du tryptophane et d'autres dérivés [4-6]. Récemment de nouveaux composés colorimétriques comportant une fonction aldéhyde ont été proposés pour détecter l'indole : le *p*-méthoxybenzaldéhyde (MOB) et le 4-méthoxy-1-naphtaldéhyde (MON) **[**7**]**. Bien que moins utilisé, l'acide croconique est également un réactif pour la détection de l'indole. La structure moléculaire des différents composés est représentée au schéma 1 ci-après.

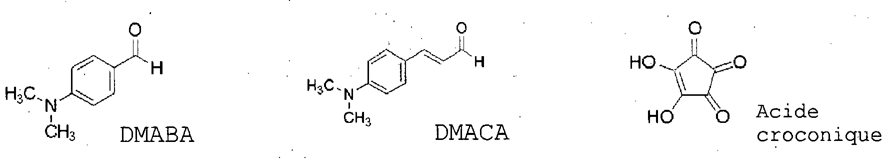

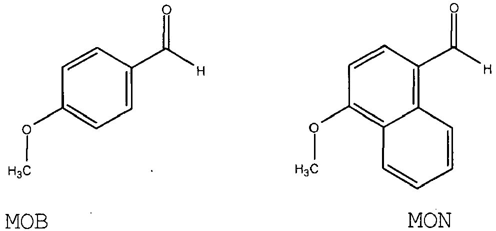

### Schéma 1 : Représentation de divers réactifs utilisés pour le dosage de l'indole et de ses dérivés

L'un des problèmes majeurs est de pouvoir doser sélectivement l'indole, le scatole ou le tryptophane et de discriminer chacun de ces constituants vis-à-vis des interférents potentiels qui sont souvent présents dans la même solution. En effet, les dérivés de l'indole se différencient uniquement par la nature de la chaîne latérale (voir schéma 2).

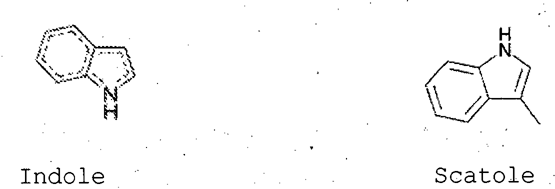

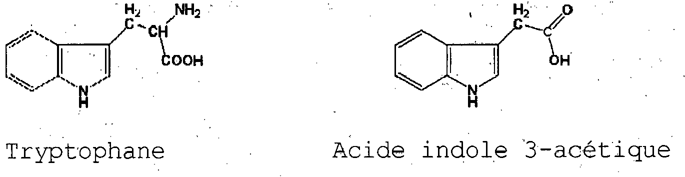

### Schéma 2 : Représentation de l'indole et de quelques dérivés indoliques

Volkl et Quadbeck ont utilisé l'acide croconique pour mettre en évidence la présence d'indole et de ses dérivés dans une solution aqueuse contenant environ 60% d'acide sulfurique concentré [8]. Selon cet article, le produit de la réaction avec l'indole absorbe à 495 nm avec un coefficient d'absorption ε = 1,7.10⁵ L.mol⁻¹. cm⁻¹ ; celui du scatole absorbe à 520 nm avec un coefficient d'absorption ε = 1,8.10⁴ L.mol⁻¹. cm⁻¹ et celui du tryptophane à 467 nm (coefficient d'absorption non déterminé). Il est donc possible de doser l'indole et le scatole quantitativement avec des limites de détection respectives de l'ordre de 1.10⁻⁶ et 1.10⁻⁵ mol.L⁻¹. Il est également à noter que ces coefficients d'absorption élevés restreignent la gamme de mesure dynamique sur deux ordres de grandeur soit 1.10⁻⁴ et 1.10⁻³ mol.L⁻¹ pour l'indole et le scatole respectivement. Les autres interférents probables notés par les auteurs sont le 2-méthylindole (absorption maximale à 520 nm), et le N-méthylindole (absorption maximale à 495 nm) dont les produits de réaction ont des coefficients d'absorption moléculaire du même ordre que ceux de l'indole et du scatole.

Les réactifs d'Ehrlich et de Kovac sont préparés à partir du DMABA dilué dans une solution alcoolique additionnée de 10% à 20% en volume d'acide chlorhydrique concentré. Ces réactifs donnent avec l'indole un produit de couleur rose-rouge [4,5] dont le maximum d'absorption se trouve à 563 nm [6]. Ils donnent avec l'acide 3-indoleméthylpropionique, l'acide 3-indolepropionique et l'acide 3-indolebutyrique un produit de couleur bleu-rouge (575 nm) en solution après extraction au xylène [4] et de couleur rouge-violet après deux minutes de chauffage de la solution à tester contenant un morceau de résine sur lequel ont été déposées quelques gouttes du réactif [9]. Le DMABA donne également une réaction avec le scatole et le tryptophane. Le composé de réaction avec le scatole se forme rapidement, il a une couleur bleu-pourpre (λ = 578 nm). A l'inverse, le composé formé par réaction avec le tryptophane est de couleur jaune (λ = 460 nm), le développement de coloration est très lent (jusqu'à 24 heures) et la coloration est peu intense comparée à celles données par les produits de l'indole et du scatole.

Le DMACA est également utilisé pour la détection de l'indole et de ses dérivés dans des conditions similaires à celles présentées pour le DMABA. Le DMACA donne un produit bleu-vert (λₘₐₓ = 640 nm) [5] avec l'indole et rouge-violet (λ = 562 nm) avec de grandes quantités de tryptophane (> 2,5 mg.mL⁻¹), avec l'acide indoleacétique et avec le scatole [10].

Toutes les études s'accordent à dire que les tests menés à base de DMACA sont plus sensibles que ceux basés sur une réaction avec le DMABA. Le principal avantage de ces techniques reposant sur des réactions en phase liquide sont la facilité de réalisation des tests puisqu'il s'agit de mettre en contact les réactifs, d'attendre le développement de la coloration et d'établir un spectre d'absorption UV-visible ou une mesure colorimétrique pour pouvoir déterminer la concentration. Cependant, ces techniques souffrent de plusieurs points faibles. Les réactifs à base de DMACA, d'acide croconique ou de DMABA ne sont pas stables dans le temps, il est donc nécessaire de préparer une nouvelle solution réactive au minimum tous les mois, de la conserver au frais et à l'abri de la lumière. Le développement de coloration étant sujet à modification au cours du temps, il est nécessaire d'effectuer une nouvelle gamme étalon avant chacune des analyses et de maintenir une durée entre le test et la lecture qui soit fixe. L'utilisation des méthodes colorimétriques n'est pas possible si la solution à tester présente déjà une coloration (cas souvent rencontré lors d'analyses biologiques), ceci nécessite bien souvent une étape d'extraction des dérivés d'indole par un solvant (xylène, chloroforme). Pour finir, malgré les différentes préparations et molécules-sonde utilisées, aucune étude n'est parvenue à trouver une formulation qui permette d'obtenir un test sélectif à 100% pour un dérivé d'indole en particulier, i.e. qui puisse discriminer sensiblement différents composés.

D'autres techniques de détection consistent à utiliser des réactifs adsorbés sur un substrat avec des analytes en solution. La méthode de Vracko consiste à mettre en contact un milieu liquide contenant les dérivés de l'indole avec un ruban de matière absorbante contenant du DMABA et de l'acide chlorhydrique [11]. L'essai est positif si une coloration rose-rouge se forme à la surface de contact entre le papier et le liquide à tester. En variante de ce test, l'acide chlorhydrique peut être remplacé par de l'acide oxalique.

Ces tests n'ont pas vocation à faire des analyses quantitatives, ils permettent juste de révéler la présence ou l'absence d'indole. Ce type de bandelettes test est commercialisé (Sigma-Aldrich) mais une date d'utilisation courte et des conditions de conservation très strictes sont données aux utilisateurs. Pour vérifier que les kits sont toujours actifs, les fournisseurs préconisent de faire au préalable des tests avec soit des bactéries productrices d'indole et non-productrices d'indole, soit directement avec une solution d'indole diluée.

D'autres techniques de détection enfin consistent à utiliser des réactifs adsorbés sur un substrat avec des analytes en phase gazeuse. Ainsi, l'étude de Kohno et *al.* concerne la détection colorimétrique de l'indole en phase gazeuse [12]. Ils ont déposé un film de Nafion contenant du DMABA sur une plaque de polyester. Suite à l'exposition à des vapeurs d'indole, le spectre d'absorption du film présente une double bande d'absorption (535 et 580 nm) et le film est de couleur pourpre. Si par la suite, le film est trempé dans une solution d'eau oxygénée à 6%, une couleur rose-violet intense se développe et le spectre d'absorption du produit voit ses bandes d'absorption se déplacer vers l'UV (480 et 535 nm). Pour finir, si le film est rincé à l'eau et séché avec de l'air sec, le spectre évolue de nouveau pour ne laisser apparaître qu'une bande intense centrée à 510 nm, le film est alors de couleur magenta. Cette couleur est stable pour au moins 2 h. Les auteurs laissent apparaître des interférences certaines avec le 2-méthylindole et le 1-méthylindole ainsi qu'avec le pyrrole qui donnent un produit ayant un spectre similaire à celui du produit avec l'indole. En revanche, le scatole, la pyridine, le thiophène et les cétones n'interfèrent pas du tout. Les amines aliphatiques, l'aniline et le furane donnent quant à eux un produit de couleur jaune facilement discernable de celui de l'indole. La limite de détection de cette technique est de l'ordre de 2 ppm d'indole dans de l'air à une humidité relative supérieure à 30%. La totalité des 3 étapes du processus dure approximativement 50 min. La réponse du capteur à une augmentation de concentration n'est pas linéaire mais plutôt parabolique entre 0 et 15 ppmV. La sensibilité du capteur est relativement constante à des humidités relatives supérieures à 30% mais chute drastiquement à des humidités relatives inférieures à 20%.

La demande internationale WO 2006/107370 de Mac Donald mentionne la détection de l'indole dans une phase gazeuse avec le réactif DMACA adsorbé sur un support solide [13] Les divers supports décrits sont les papiers adsorbants, les textiles, les films plastiques, les films microporeux (sans autre précision) de silice (SiO₂), d'alumine, d'oxyde de zirconium, d'oxyde de magnésium, d'oxyde de titane, d'oxyde de fer, d'oxyde de zinc et des nanoparticules de silice se présentant sous forme de poudre. Il s'agit dans ce cas de révéler la présence d'indole pour l'identification d'une bactérie, mais il n'y a pas de mesure quantitative de la teneur d'indole dans la phase gazeuse. De plus, aucune étude concernant les interférents n'est mentionnée.

Gojon et al, 1997 (« A comparison of immobilization sol-gel methods for hydrazine sensor », Sensors and Actuators, vol. 38, pages 154-162) et la thèse de Christine Gojon soutenue le 13 décembre 1996 décrivent un capteur chimique optique pour détecter et quantifier l'hydrazine mettant en oeuvre un matériau sol-gel comprenant du DMABA.

Aucune des techniques conventionnelles de détection de l'indole ne peut satisfaire aux critères d'une analyse de terrain à faible coût, rapide, sélective et sensible. Chacune des techniques
précédemment citées présente des avantages et des inconvénients mais aucune ne satisfait à tous les critères à la fois. De plus, aucune des techniques ne permet d'effectuer une analyse en phase gazeuse ou en phase liquide avec le même dispositif.

Il y a donc un réel besoin pour un capteur sélectif au minimum à l'indole, portable (< 1kg), utilisable sans formation particulière, capable de fournir une réponse sensible, d'avoir une limite minimale de détection sans préconcentration préalable de l'ordre de 1.10⁻⁶ mol.L⁻¹, de donner une réponse rapide (< 15min) et de couvrir une gamme de détection la plus large possible (au minimum 3 ordres de grandeur), sans nécessiter de préparation des échantillons. De plus, ce capteur devrait être utilisable indifféremment pour des analyses en phase gazeuse ou en phase liquide, voire même par contact avec des échantillons solides ou semi-solides. Pour finir, la réponse de ce capteur devrait être stable au cours du temps et ne pas présenter de variabilité de réponse en fonction de sa durée de conservation.

### EXPOSÉ DE L'INVENTION

La présente invention permet de résoudre les problèmes techniques précédemment listés et de répondre aux inconvénients des procédés et dispositifs de l'état de la technique.

En effet, par leurs travaux, les inventeurs ont mis en oeuvre un détecteur chimique de type colorimétrique, portable, facilement manipulable, à usage unique, utilisable pour l'indole et les dérivés indoliques mais aussi pour d'autres composés chimiques listés ci-après, utilisable en phase gazeuse et/ou en phase liquide voire même par contact avec un tissu humain ou animal tel qu'un tissu adipeux et permettant des piégeages, des détections et éventuellement des quantifications en temps réel.

De plus, le détecteur chimique selon l'invention qui se présente sous une forme solide et, plus particulièrement, sous la forme d'un matériau sol-gel poreux comprenant une ou plusieurs molécules-sonde ne nécessite pas de manipulation de liquide, hormis l'échantillon lorsque celui-ci est liquide. Cette caractéristique du détecteur selon l'invention permet d'améliorer sa conservation. En effet, le détecteur selon l'invention peut être conservé au minimum 6 mois avant utilisation, alors que les détecteurs de type solutions liquides de réactif de l'état de la technique doivent être préparés au moment de l'analyse.

De même, le détecteur selon l'invention ne nécessité qu'un prélèvement de 10 à 20 µL de solution à analyser alors qu'il faut 1 à 5 mL d'échantillon dans les méthodes de l'état de la technique utilisant les réactifs liquides.

La présente invention concerne donc un matériau sol-gel poreux comprenant au moins une molécule-sonde choisie dans le groupe constitué par l'acide croconique et le groupe des molécules-sonde à fonction aldéhyde constitué par le *p*-diméthylaminobenzaldéhyde (DMABA), le *p*-diméthylaminocinnamaldéhyde (DMACA), le p-méthoxybenzaldéhyde (MOB) et le 4-méthoxy-1-naphtaldéhyde (MON) tel que défini dans le jeu de revendications annexé.

Par « matériau sol-gel », on entend un matériau obtenu par un procédé sol-gel consistant à utiliser comme précurseurs des alcoxydes métalliques, identiques ou différents, de formule M(OR)ₙ(R')ₘ dans laquelle M est un métal tel que le silicium, R et R' représentent un groupement alkyle et m et n des entiers avec m + n = 4, 2 ≤ n ≤ 4 et 0 ≤ m ≤ 2. Les matériaux sol-gel sont généralement préparés dans un solvant, qui est de préférence miscible à l'eau et évaporable dans des conditions douces, dans lequel les précurseurs sont solubles. Dans le cas des alcoxydes de silicium, on peut notamment citer les alcools, tels que le méthanol, l'éthanol ; les éthers, tels que le diéthyléther et le tétrahydrofurane ; les solvants chlorés, tels que le chloroforme, CH₂Cl₂, C₂H₅Cl₂ ou d'autres solvants aprotiques comme CH₃CN, l'acétone, la méthyléthylcétone, ou le dioxane ou protiques comme l'acide acétique, le formamide. En présence d'eau, l'hydrolyse des groupements alcoxyde (-OR) intervient et ces derniers sont transformés en groupements silanol (Si-OH) qui se condensent en formant des groupements siloxane (Si-O-Si). De petites particules de taille généralement inférieure à 1 nanomètre sont alors formées. Elles s'agrègent et forment des amas lacunaires en suspension dans le liquide : c'est le sol. La polycondensation se poursuivant au cours du temps, la viscosité du sol augmente jusqu'à gélification : le sol devient un gel. Un matériau sol-gel solide est obtenu par séchage du gel. Au cours de cette étape, les solvants résiduels et interstitiels s'échappent du réseau polymérique formé et s'évaporent, ce qui provoque la contraction du matériau. On obtient un matériau final dont le volume est réduit par comparaison au volume occupé par le sol. Le sol-gel peut se présenter sous différentes formes, il peut ainsi par exemple être préparé dans un moule pour lui donner une forme spécifique ou bien réalisé sous forme de films notamment par « spin-coating » ou par « dip-coating » (films d'épaisseur inférieure à 1 µm) ou par spray (films d'épaisseur supérieure à 1 µm).

La porosité des matériaux sol-gel permet d'établir une nomenclature en fonction de la taille des pores, en effet selon les règles établies par l'International Union of Pure & Applied Chemistry (IUPAC) on peut distinguer, selon le diamètre moyen des pores dans un matériau, les micropores (moins de 20 Â), des mésopores (20-500 Å) et des macropores (plus de 500 Å). Le matériau sol-gel mis en oeuvre dans le cadre de la présente invention est poreux et notamment mésoporeux. Avantageusement, ce matériau présente une distribution de taille de pores allant de 10 à 100 angströms, notamment de 15 à 80 angströms et, en particulier, de 20 à 70 angströms et une surface spécifique de 200 à 800 m².g⁻¹, notamment de 300 à 700 m².g⁻¹ et, en particulier, de 400 à 600 m².g⁻¹

Le matériau sol-gel mis en oeuvre dans le cadre de la présente invention a avantageusement un pH intrinsèque inférieur à 1 et notamment, un pH intrinsèque inférieur à 0 (i.e. pH négatif). Le pH intrinsèque au sein du matériau sol-gel peut être mesuré à l'aide de réactifs colorés et notamment avec du bleu de thymol.

Le matériau sol-gel mis en oeuvre dans le cadre de la présente invention est essentiellement préparé à partir de 1 à 4 précurseurs alcoxysilanes et essentiellement obtenu à partir de l'hydrolyse de 1 à 4 précurseurs alcoxysilanes. Le matériau sol-gel mis en oeuvre dans le cadre de la présente invention est donc essentiellement constitué d'unités issues de l'hydrolyse de 1 à 4 précurseurs alcoxysilanes. Le matériau sol-gel peut être essentiellement préparé à partir de 2 ou 3 et particulièrement 2 précurseurs alcoxysilanes différents. En variante, le matériau sol-gel peut être essentiellement préparé à partir d'un seul précurseur alcoxysilane, notamment de type bisilane. Quelle que soit la variante, le matériau sol-gel final, incluant des molécules-sonde, contient en général de 85% et notamment de 60 à 80% en masse de dérivés d'alcoxysilanes.

Dans une première variante désignée ci-après V₁, le matériau sol-gel mis en oeuvre dans le cadre de la présente invention est essentiellement préparé à partir :
- d'au moins un premier alcoxysilane de formule Si(OR¹)₄ ou R²Si(OR³)₃ dans lesquelles R¹, R² et R³, identiques ou différents, représentent un groupement alkyle de 1 à 6 atomes de carbone et
- d'au moins un second alcoxysilane de formule R⁴Si(OR⁵)₃ ou (R⁶O)₃Si-CH₂CH₂Si(OR⁷)₃ dans lesquelles R⁴ représente un groupement alkyle de 1 à 6 atomes de carbone substitué et R⁵, R⁶ et R⁷, identiques ou différents, représentent un groupement alkyle de 1 à 6 atomes de carbone.

Dans la variante V₁, le rapport molaire premier(s) alcoxysilane(s)/ second(s) alcoxysilane(s) est compris entre 1/0,01 et 1/1 ; notamment entre 1/0,02 et 1/0,80 ; et, en particulier, entre 1/0,03 et 1/0,50.

Pour les radicaux R¹, R², R³, R⁵, R⁶ et R⁷, on entend par groupement alkyle de 1 à 6 atomes de carbone, un groupement alkyle, linéaire ou ramifié, présentant de 1 à 6 atomes de carbone et notamment de 1 à 4 atomes de carbone.

Pour les radicaux R⁴, on entend par groupement alkyle de 1 à 6 atomes de carbone substitué, un groupement alkyle, linéaire ou ramifié, présentant de 1 à 6 atomes de carbone et notamment de 1 à 4 atomes de carbone, substitué. Ledit groupement R⁴ présente une ou plusieurs substitutions, identiques ou différentes, par un élément choisi dans le groupe constitué par un halogène tel que le fluor ou le chlore, un radical - NH₂, un radical -NHR⁸ avec R⁸ représentant un groupement alkyle de 1 à 6 atomes de carbone tel que précédemment défini, un radical -COOH, un radical -COOR⁹ avec R⁹ représentant un groupement alkyle de 1 à 6 atomes de carbone tel que précédemment défini.

A titre de premier alcoxysilane utilisable dans le cadre de la présente invention, on peut citer le tétraméthoxysilane (TMOS, Si(OCH₃)₄) le tétraéthoxysilane (TEOS, Si(OC₂H₅)₄), le tétrapropoxysilane (TPOS, Si(OC₃H₇)₄), le tétrabutoxysilane (TBOS, Si(OC₄H₉)₄), le méthyltriméthoxysilane (MTMOS, (CH₃)Si(OCH₃)₃), l'éthyltriméthoxysilane (ETMOS, (C₂H₅)Si(OCH₃)₃), le propyltriméthoxysilane (PTMOS, (C₃H₇)Si(OCH₃)₃), le méthyltriéthoxysilane (MTEOS, (CH₃)Si(OC₂H₅)₃), l'éthyltriéthoxysilane (ETEOS, (C₂H₅)Si(OC₂H₅)₃) et le propyltriéthoxysilane (PTEOS, (C₃H₇)Si(OC₂H₅)₃) et leurs mélanges. Avantageusement, le premier alcoxysilane mis en oeuvre dans le cadre de la présente invention est le TMOS.

Dans le cadre de la présente invention, le second précurseur alcoxysilane permet de modifier et notamment d'agrandir la taille des pores du matériau sol-gel par l'utilisation de différents groupements de substitution. A titre de second alcoxysilane utilisable dans le cadre de la présente invention, on peut citer le 3-aminopropyltriéthoxysilane (APTES, Si(C₃H₆NH₂)(OC₂H₅)₃), le 3-aminopropyltriméthoxysilane (APTMS, Si(C₃H₆NH₂)(OCH₃)₃), le (3-(méthylamino)propyl)triméthoxysilane (Si(C₃H₆NHCH₃) (OCH₃)₃), le 3-carboxypropyltriéthoxysilane (Si(C₃H₆CO₂H)(OC₂H₅)₃), le 3-carboxypropyltriméthoxysilane (Si(C₃H₆CO₂H)(OCH₃) le 1,2-bis(triéthoxysilyl)éthane (OC₂H₅)₃Si-CH₂-CH₂-Si(OC₂H₅)₃), le 1,2-bis(triméthoxysilyl)éthane ((OCH₃)₃Si-CH₂-CH₂-Si(OCH₃)₃), le (3,3,3-trichloropropyl) triéthoxysilane (Si(C₂H₅CCl₃) (OC₂H₅)₃) et le 3,3,3-trifluoropropyl-triméthoxysilane (Si(C₂H₅CF₃)(OCH₃)₃) et leurs mélanges. Avantageusement, le second alcoxysilane mis en oeuvre dans le cadre de la présente invention est l'APTES.

Ainsi, un matériau sol-gel particulier dans le cadre de la présente invention est préparé essentiellement à partir de TMOS et d'APTES dans un rapport molaire compris entre 1/0,01 et 1**/**1 ; notamment entre 1/0,02 et 1/0,80 ; et, en particulier, entre 1/0,03 et 1/0,50. Plus particulièrement, le rapport molaire TMOS/APTES est de 1/0,04 mais peut évoluer jusqu'à 1/0,3. Ainsi, le matériau sol-gel selon l'invention comprend des unités de TMOS et d'APTES dans de telles proportions.

Dans une deuxième variante désignée ci-après V₂, le matériau sol-gel mis en oeuvre dans le cadre de la présente invention est essentiellement préparé à partir d'au moins un alcoxysilane de formule (R⁶O)₃Si-CH₂-CH₂-Si(OR⁷)₃ tel que précédemment défini.

Dans une troisième variante désignée ci-après V₃, le matériau sol-gel mis en oeuvre dans le cadre de la présente invention est essentiellement préparé à partir :
- d'au moins un premier alcoxysilanes de formule (R⁶O)₃Si-CH₂-CH₂-Si(OR⁷)₃ tel que précédemment défini et
- d'au moins un second alcoxysilane de formule Si(OR¹)₄, R²Si(OR³)₃ ou R⁴Si(OR⁵)₃ tel que précédemment défini.

Dans la variante V₃, le rapport molaire premier(s) alcoxysilane(s)/ second(s) alcoxysilane(s) est compris entre 1/1 et 1/100 ; notamment entre 1/1,25 et 1/50 ; et, en particulier, entre 1/2 et 1/33.

La molécule-sonde mise en oeuvre dans le cadre de la présente invention i.e. choisie parmi l'acide croconique et les molécules-sonde à fonction aldéhyde que sont le DMABA, le DMACA, le MOB, le MON, et leurs mélanges, se trouve à la surface des pores du matériau sol-gel. Les molécules-sonde peuvent être adsorbées à la surface des pores du matériau sol-gel et/ou liées à cette surface par des liaisons non-covalentes (liaisons hydrogène ou liaisons ioniques) et/ou par des liaisons covalentes. Généralement les molécules-sonde sont réparties dans l'ensemble du volume du matériau.

Le pourcentage pondéral de molécules-sonde est avantageusement de 0,01 à 30%, en particulier de 0,1 à 20% et tout particulièrement de 1 à 10% rapporté au poids total du matériau sol-gel poreux.

Le matériau sol-gel poreux peut en outre contenir des composés structurants tels que des polymères organiques, comme les ionomères et notamment les polymères organiques fluorés dérivés de l'éthylène à fonction acide, e.g. le NAFION®, et également des tensioactifs généralement neutres.

La présente invention concerne également un procédé de préparation d'un matériau sol-gel poreux selon l'invention comprenant au moins une molécule-sonde telle que précédemment définie.

Différents procédés de préparation sont envisageables dans le cadre de la présente invention. La (ou les) molécule(s)-sonde peu(ven)t être incorporée(s) au matériau sol-gel, après la préparation de ce dernier par un procédé sol-gel classique.

Cette incorporation peut se faire par diffusion en voie gazeuse en mettant en contact la molécule-sonde sous forme gazeuse directement avec le matériau (sous vide partiel ou par circulation du gaz) ou en voie liquide en mettant le matériau directement dans une solution (aqueuse ou solvant) contenant la molécule-sonde dissoute ou diluée.

Cette incorporation peut également se faire par fonctionnalisation ou post-dopage consistant à créer une liaison covalente entre le matériau et la molécule-sonde. Pour cela, il est avantageux de fonctionnaliser la surface du matériau pour améliorer sa compatibilité avec la molécule-sonde ou fonctionnaliser cette dernière.

En variante préférée, le procédé de préparation selon l'invention consiste à ajouter la molécule sonde-directement lors de la préparation du sol (technique « one-pot »), ce qui entraîne l'encapsulation directe de la molécule-sonde dans le réseau de silice et permet d'obtenir une meilleure répartition des molécules-sonde dans le matériau sol-gel selon la présente invention. La dissolution des molécules-sonde peut se faire au choix dans le solvant (étape (a₁) ou (a₂) ci-après) ou dans l'eau (étape (c₁) ou (c₂) ci-après) servant à la préparation du sol. Le choix préférentiel sera de dissoudre la molécule-sonde dans le milieu dans lequel elle est la plus soluble ou la mieux miscible.

Le procédé de préparation d'un matériau selon la variante (V₁) de l'invention comprend les étapes successives suivantes consistant à :
a₁) mélanger au moins un premier alcoxysilane de formule Si(OR¹)₄ ou R²Si(OR³)₃ tel que précédemment défini avec un solvant et au moins une molécule-sonde choisie dans le groupe constitué par l'acide croconique, le DMABA,le DMACA, le MOB et le MON ;
b₁) ajouter au mélange de l'étape (a₁) au moins un second alcoxysilane de formule R⁴Si(OR⁵)₃ ou (R⁶O)₃Si-CH₂-CH₂-Si(OR⁷)₃ tel que précédemment défini ;
c₁) ajouter au mélange de l'étape (b₁) de l'eau puis un acide ;
d₁) mettre en forme le sol obtenu suite à l'étape (c₁) pour obtenir le matériau sol-gel comprenant au moins une molécule-sonde selon l'invention.

Le procédé de préparation d'un matériau selon les variantes (V₂) et (V₃) de l'invention comprend les étapes successives suivantes consistant à :
a₂) mélanger au moins un premier alcoxysilane de formule (R⁶O₃Si-CH₂-CH₂-Si(OR⁷)₃ tel que précédemment défini avec un solvant et au moins une molécule-sonde choisie dans le groupe constitué par l'acide croconique, le DMABA, le DMACA, le MOB et le MON ;
b₂) éventuellement ajouter au mélange de l'étape (a₂) au moins un second alcoxysilane de formule Si(OR¹)₄, R²Si(OR³)₃ ou R⁴Si(OR⁵)₃ tel que précédemment défini ;
c₂) ajouter au mélange de l'étape (a₂) ou éventuellement de l'étape (b₂) de l'eau puis un acide ;
d₂) mettre en forme le sol obtenu suite à l'étape (c₂) pour obtenir le matériau sol-gel comprenant au moins une molécule-sonde selon l'invention.

Les molécules-sonde mises en oeuvre dans la présente invention peuvent être dissoutes lors du mélange de l'étape (a₁) ou (a₂) ou préalablement à cette étape et notamment dans le solvant mis en oeuvre lors de cette dernière. Avantageusement, les molécules-sonde sont dissoutes dans le solvant en plaçant le mélange molécules-sonde et solvant dans un bain à ultrasons pendant une durée de 1 à 30 min, notamment de 5 à 20 min et, en particulier, pendant environ 10 min (10 min ± 2 min) de façon à obtenir un mélange homogène. La concentration en molécules-sonde dans le solvant peut varier en fonction des besoins du détecteur et aller jusqu'à la saturation dans le solvant.

Le solvant mis en oeuvre lors de l'étape (a₁) ou (a₂) est destiné, d'une part, à dissoudre la (ou les) molécule(s)-sonde et, d'autre part, à augmenter la miscibilité entre les précurseurs et l'eau. Ce solvant est avantageusement choisi dans le groupe constitué par un alcool tel que le méthanol, l'éthanol, le propanol ou le butanol, l'acétone, le formamide, la méthyléthylcétone, le chloroforme, le dichlorométhane, l'acide acétique et leurs mélangés. Avantageusement, ce solvant est du méthanol et/ou de l'éthanol.

L'étape (a₁) ou (a₂) du procédé de l'invention consiste, plus particulièrement, à mélanger le (ou les) premier(s) alcoxysilane(s), le solvant et la (ou les) molécule(s)-sonde à l'aide d'un agitateur, d'un agitateur magnétique, d'un barreau magnétique, d'un bain à ultrasons ou d'un homogénéisateur, de façon à obtenir un mélange homogène. Le mélange de l'étape (a₁) ou (a₂) peut être effectué à une température comprise entre -45 et +30°C, notamment entre -35 et +10°C, en particulier entre -25 et 0°C et, plus particulièrement, à une température de l'ordre de -15°C (i.e. -15°C ± 5°C) pendant une durée de 30 sec à 15 min, notamment de 60 sec à 10 min, en particulier, de 90 sec à 5 min, et, plus particulièrement, pendant environ 2 min (i.e. 2 min ± 30 sec).

Avantageusement, lors de l'étape (b₁) ou (b₂) du procédé selon l'invention, la quantité adéquate du (ou des) second(s) alcoxysilane(s) est ajoutée au mélange de l'étape (a) puis le mélange obtenu est agité à l'aide d'un agitateur, d'un agitateur magnétique, d'un barreau magnétique, d'un bain à ultrasons ou d'un homogénéisateur, de façon à obtenir un mélange homogène. L'étape (b₁) ou (b₂) et notamment le mélange de l'étape (b₁) ou (b₂) peuvent être effectués à une température comprise entre -45 et +30°C, notamment entre -35 et +10°C, en particulier entre -25 et 0°C et, plus particulièrement, à une température de l'ordre de -15°C (i.e. -15°C ± 5°C) et ce, pendant une durée de 30 sec à 15 min, notamment de 60 sec à 10 min, en particulier, de 90 sec à 5 min, et, plus particulièrement, pendant environ 2 min (i.e. 2 min ± 30 sec).

L'étape (c₁) ou (c₂) du procédé selon l'invention consiste à ajouter, au mélange de l'étape (b₁) ou (b₂), tout d'abord, de l'eau, à agiter le mélange ainsi obtenu puis à ajouter lentement, à une vitesse comprise entre 6 et 10 mL par minute, un acide tel qu'un acide fort. L'agitation lors de l'étape (c₁) ou (c₂) est effectuée à l'aide d'un agitateur, d'un agitateur magnétique, d'un barreau magnétique, d'un bain à ultrasons ou d'un homogénéisateur, et dure de 5 sec à 5 min, notamment de 10 sec à 1 min, en particulier, de 20 sec à 45 sec, et, plus particulièrement, pendant environ 30 sec (i.e. 30 sec ± 5 sec). L'étape (c₁) ou (c₂) peut être effectuée à une température comprise entre -45 et +30°C, notamment entre -35 et +10°C, en particulier entre -25 et 0°C et, plus particulièrement, à une température de l'ordre de -15°C (i.e. -15°C ± 5°C). L'eau ajoutée lors de l'étape (c₁) ou (c₂) est avantageusement ultrapure, telle que de l'eau distillée ou de l'eau déionisée.

L'acide mis en oeuvre lors de l'étape (C₁) ou (c₂) a pour but d'amener les molécules-sonde sous leur forme la plus réactive et, de plus, sert de catalyseur aux réactions d'hydrolyse et/ou de polycondensation des précurseurs silicés. Cet acide est choisi dans le groupe constitué par un acide organique tel que l'acide oxalique, l'acide picrique, l'acide méthanesulfonique, l'acide n-propanesulfonique, l'acide trichloracétique, l'acide trifluoroacétique etc. ; un acide inorganique tel que l'acide chlorhydrique, l'acide sulfurique, l'acide nitrique, l'acide iodique, l'acide thiosulfurique, l'acide sulfamique etc. ; un anhydride d'acide tel que l'acide chlorhydrique gazeux, l'anhydride maléique, l'anhydride succinique etc. ; et leurs mélanges. Avantageusement, l'acide utilisé à l'étape (c₁) ou (c₂) est de l'acide chlorhydrique, notamment de l'acide chlorhydrique à 37% et/ou de l'acide oxalique. Selon un mode de réalisation particulier, l'acide est introduit de telle sorte que le pH au sein de la matrice soit inférieur à 1, de préférence inférieur à 0. La molarité de l'acide est supérieure ou égale à 2 M, notamment supérieure ou égale à 4 M et avantageusement de l'ordre de 6 M (i.e. 6 M ± 1 M) dans le sol obtenu lors de l'étape (c₁) ou (c₂).

Dans le cadre du procédé selon l'invention, le rapport molaire alcoxysilanes (premier(s) + éventuel(s) second(s))/solvant/eau est avantageusement compris entre 1/2/4 et 1/20/10, notamment entre 1/4/4 et 1/10/6, et, en particulier, de 1/5/4. L'apport d'acide est variable et avantageusement au minimum égal à la quantité de molécule(s)-sonde utilisée et pourra typiquement atteindre une concentration de 8 mol.L⁻¹ dans le sol. L'utilisation d'acide concentré est conseillée pour atteindre les résultats escomptés. En effet, le même apport en nombre de moles d'un acide dilué pourrait modifier les propriétés du sol-gel et contribuer à la non-reproductibilité des résultats.

Le (ou les) second(s) alcoxysilane(s) et l'acide modifient les conditions initiales de pH du sol et catalysent la gélification. Aussi, il faut procéder à la mise en forme, selon l'étape (d₁) ou (d₂) du procédé, le plus rapidement possible en maintenant le sol le plus possible à une température comprise entre -45 et +30°C, notamment entre -35 et +10°C, en particulier entre -25 et 0°C et, plus particulièrement, à une température de l'ordre de -15°C (i.e. -15°C ± 5°C). Avantageusement, les étapes (a₁), (b₁), (c₁) et (d₁) (ou (a₂), (b₂), (c₂) et (d₂)) du procédé selon l'invention sont effectuées à la même température. La mise en forme lors de l'étape (d₁), ou (d₂) du procédé consiste à déposer une quantité adéquate du sol obtenu à l'étape (c₁) ou (c₂) dans un moule pour obtenir les blocs de sol-gel attendu. Ce moule peut présenter une forme et une taille quelconques. Il est avantageusement en polystyrène ou en polypropylène. A titre d'exemple, le moule peut être un puits d'une plaque multipuits.

Suite à l'étape (d₁) ou (d₂) du procédé selon l'invention et une fois que le sol est gélifié, on peut procéder en outre au séchage des blocs du sol-gel obtenu de façon à faire évaporer les solvants et- acides résiduels. Le séchage des matériaux sol-gel se déroule avantageusement à une température contrôlée et sous atmosphère de gaz inerte sec (azote, argon, air, etc.). Le séchage des blocs du sol-gel peut notamment être réalisé en disposant un couvercle perméable aux gaz et plus particulièrement un film poreux à la surface des moules puis en plaçant ces moules à température ambiante (i.e. 21°C ± 4°C) ou dans une enceinte thermostatée à une température comprise entre 10 et 60°C et notamment entre 20 et 40°C. Le séchage peut être effectué sous une hotte aspirante. L'atmosphère de séchage peut aussi être un gaz inerte sec et pur (azote qualité U - pureté < 99,5%, air industriel.qualité FID, etc...). La durée pour un séchage complet sera variable entre 2 h et 10 jours et notamment entre 6 h et 5 jours.

Une fois le séchage complet intervenu, les matériaux sol-gel selon l'invention, également appelés dans la présente « monolithes » ou « xérogels », se démoulent facilement et peuvent être conservés dans des récipients fermés tels que des tubes en verre ou en polytetrafluoroéthylène (ex. : TEFLON®) fermés hermétiquement. Pour une conservation plus longue (> 6 mois), les matériaux sol-gel secs peuvent être conservés au réfrigérateur à +4°C ± 4°C. Pour une conservation plus longue encore (> 12 mois), les matériaux sol-gel peuvent être démoulés, avant séchage complet, notamment quand leur diamètre a légèrement rétréci, et conservés ainsi dans un récipient scellé tel qu'un tube en verre scellé. Dans ce cas, avant d'utiliser le matériau sol-gel de l'invention en tant que détecteur, l'utilisateur devra procéder au séchage complet de ce matériau en le plaçant quelques heures, notamment entre 1 et 10 heures, en particulier, entre 2 et 5 heures et typiquement 3 heures, à l'air libre ou dans une atmosphère de gaz inerte sec et pur (azote de qualité U, air industriel pour les chromotographies en phase gazeuse etc.). Les matériaux sol-gel selon l'invention sous forme de monolithes ou xérogels présentent avantageusement une épaisseur supérieure ou égale à 5 µm, notamment supérieure ou égale à 50 µm, en particulier, supérieure ou égale à 200 µm et, tout particulièrement, comprise entre 1 et 2 mm. Les matériaux sol-gel selon l'invention doivent présenter une épaisseur suffisamment importante pour permettre des mesures d'absorbance.

La présente invention concerne également l'utilisation d'un matériau sol-gel comprenant au moins une molécule-sonde selon l'invention ou susceptible d'être préparé par un procédé de préparation selon la présente invention pour piéger et/ou détecter et éventuellement quantifier au moins un composé chimique.

Le composé chimique susceptible d'être piégé et/ou détecté et/ou quantifié dans le cadre de la présente invention est avantageusement choisi dans le groupe constitué par l'indole et ses dérivés, l'urobilinogène, la porphobilinogène, les pyrroles, les amines primaires et notamment les amines primaires aromatiques, l'acide para-aminobenzoïque, l'hydrazine, la 4-éthoxyphénylurée (ou dulcine), la 5-nitro-2-prop.oxyaniline (ou P-4000), le nitrate d'urée, le dipyrone et les dérivés de sérotonine.

Un « dérivé de l'indole » ou « dérivé indoliques » est avantageusement, dans le cadre de la présente invention, un composé comprenant un noyau indole de formule : 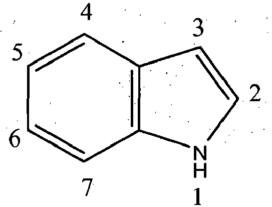 ledit noyau présentant au moins une substitution à l'une quelconque des positions 2, 3, 4, 5, 6 et 7. Avantageusement, ladite (ou lesdites) substitution(s) est(sont) choisie (s) dans le groupe constitué par un halogène, un groupement alkyle éventuellement substitué ou un groupement hétéroalkyle éventuellement substitué.

Par « groupement alkyle éventuellement substitué », on entend un groupement alkyle, linéaire ou ramifié, présentant de 1 à 6 atomes de carbone, notamment de 1 à 4 atomes de carbone et, en particulier, 1 ou 2 atomes de carbone éventuellement substitué. Par « groupement hétéroalkyle éventuellement substitué », on entend un groupement alkyle éventuellement substitué tel que défini ci-dessus présentant en outre un ou plusieurs hétéroatomes choisis dans le groupe constitué par O, N, S ou P.

Par « éventuellement substitué », on entend une substitution ou plusieurs substitutions, identiques ou différentes, sur un ou plusieurs atomes de carbone par un élément choisi dans le groupe constitué par un halogène tel que du fluor ou du chlore, un radical -NH₂, un radical -OH, un radical -NHR⁸ avec R⁸ représentant un groupement alkyle de 1 à 6 atomes de carbone tel que précédemment défini ou un radical -COOH. Avantageusement, le dérivé indolique présente une seule substitution et/ou une substitution sur le carbone 2 ou 3 du cycle indole. A titre d'exemples particuliers de dérivés indoliques, on peut citer le scatole, le tryptophane et l'acide indole 3-acétique, l'hydroxyindole.

De plus, outre l'indole et les dérivés indoliques comme expliqué dans la partie « état de la technique », les molécules-sonde mises en oeuvre dans le cadre de la présente invention sont également connues pour pouvoir réagir avec d'autres familles de composés. Ainsi, l'urobilinogène dont la présence en trop grande quantité dans les urines ou les selles peut indiquer des pathologies telles que jaunisse, infection hépatique, cirrhose, hématome, etc., alors que la présence dans les urines de la porphobilinogène qui en présence de DMABA et d'acétate de sodium forme un composé de couleur rouge indique que le sujet est atteint de porphyrie.

Les pyrroles forment un composé de couleur bleu/vert avec le DMABA avec une absorption entre 590 et 610 nm et ce, notamment en vue d'une application en microbiologie.

Les amines primaires forment avec le DMABA et le DMACA un composé de couleur jaune avec une absorption entre 380 et 400 nm, la meilleure sensibilité étant obtenue pour les amines primaires aromatiques.

L'acide para-aminobenzoïque réagit avec le DMACA pour former un composé de couleur rouge absorbant à 550 nm. L'hydrazine forme avec le DMABA un composé de couleur orange absorbant à 460 nm. La détection de ce composé présente un avantage dans le domaine du nucléaire. En effet, d'une, part, l'hydrazine est utilisée comme agent d'anticorrosion dans l'eau des circuits primaires et secondaires des installations nucléaires et, d'autre part, dans le procédé de retraitement chimique PUREX (Plutonium and Uranium Refining by Extraction) des déchets pour la séparation de l'uranium et du plutonium.

La 4-éthoxyphénylurée (ou dulcine) et la 5-nitro-2-propoxyaniline (ou P-4000) qui sont des édulcorants de synthèse réagissent avec le DMABA. Leur détection et éventuelle quantification présentent un intérêt dans le domaine agro-alimentaire où le contrôle des édulcorants et notamment des édulcorants pouvant être cancérogènes pour l'homme est important.

Le nitrate d'urée forme avec le DMABA et le DMACA des produits colorés respectivement jaune et rouge sans besoin d'ajouter d'acide car le nitrate d'urée présente un caractère acide fort. Cette détection et éventuelle quantification présentent notamment un intérêt dans le domaine de la détection des explosifs.

Le dipyrone forme avec le DMACA un produit orange en milieu acide. Sa détection et éventuelle quantification sont applicables au domaine pharmaceutique pour vérification de contrôle qualité et de la contrefaçon d'analgésiques, d'antispasmodiques ou d'antipyrétiques.

Les dérivés de la sérotonine tels que la feruloylsérotonine et la p-coumaroylsérotonine forment avec le DMABA un produit violet présentant une absorption maximale à 625 nm. Leur détection et quantification présentent un intérêt dans le domaine médical et pharmaceutique. En effet, la sérotonine est trouvée dans le cerveau, où elle joue le rôle de neurotransmetteur ou de neuromédiateur, et dans le système digestif. Elle est impliquée dans la régulation de fonctions telles que la thermorégulation, les comportements alimentaires et sexuels, le cycle veillesommeil, la douleur, l'anxiété, le contrôle moteur, le développement de l'embryon. De plus, une étude récente montre qu'un déséquilibre de sérotonine expliquerait 50% des cas de mort subite du nourrisson.

Les molécules MON et MOB sont très peu utilisées en chimie analytique et rentrent surtout dans de nombreuses compositions pour la coloration des cheveux ou de parfum. Dans le domaine analytique, l'utilisation du MON a été proposée pour les mesures de l'activité enzymatique de l'alcool déhydrogénase et l'aldéhyde déhydrogénase. Le MOB est proposé comme indicateur coloré pour la détection d'herbicides pour l'évaluation de la résistance des mauvaises herbes à ces composés. Il est aussi utilisé pour le dosage des acides nucléiques ou encore pour la détection d'amines synopathomimétiques telles que la méthyldopa, la dopamine, la noradrénaline.

L'acide croconique est utilisé pour le dosage spécifique de Fe³⁺ avec lequel il forme un complexe coloré absorbant à 500 nm.

Par conséquent, l'utilisation d'un matériau sol-gel comprenant au moins une molécule-sonde selon l'invention ou susceptible d'être préparé par un procédé de préparation selon la présente invention pour piéger et/ou détecter et éventuellement quantifier au moins un composé chimique tel que précédemment défini dans le domaine de la biochimie, de la microbiologie, dans le domaine du diagnostic médical, dans le domaine du nucléaire, dans le domaine du contrôle qualité, dans le domaine de l'agro-alimentaire, dans le domaine du contrôle vétérinaire, environnemental et/ou sanitaire et/ou dans le domaine de la parfumerie, des cosmétiques et/ou des arômes.

Plus particulièrement, la présente invention concerne un procédé pour piéger et/ou détecter et éventuellement quantifier au moins un composé chimique tel que précédemment défini comprenant les étapes consistant à :
i) mettre en contact un flux susceptible de contenir au moins un composé chimique tel que précédemment défini avec un matériau sol-gel poreux comprenant au moins une molécule-sonde tel que précédemment défini ;
ii) piéger et/ou détecter et éventuellement quantifier le (ou les) composé(s) chimique(s) éventuellement présent(s).

Le flux mis en oeuvre à l'étape (i) peut être un flux gazeux ou un flux liquide.

Le flux gazeux mis en oeuvre dans le cadre de la présente invention est avantageusement un prélèvement aérien extérieur (par exemple, au-dessus d'un champ traité par des pesticides) ou provenant d'industries du domaine chimique, agro-alimentaire, pharmaceutique, cosmétique ou nucléaire.

Le flux liquide mis en oeuvre dans le cadre de la présente invention est avantageusement choisi dans le groupe constitué par un fluide biologique ; un fluide végétal tel que sève, nectar et exsudât racinaire ; une matrice alimentaire ; de l'eau de ville, de rivière, de mer, de lac, de tours aéroréfrigérées ; de l'eau usée provenant notamment d'élevages intensifs ou d'industries du domaine chimique, pharmaceutique, cosmétique ou nucléaire ; un produit pharmaceutique ; un produit cosmétique ; un parfum ; un échantillon de terre ; etc... ou un de leurs mélanges.

Le fluide biologique est notamment choisi dans le groupe constitué par le sang tel que du sang entier ou du sang entier anti-coagulé, le sérum sanguin, le plasma sanguin, la lymphe, la salive, le crachat, les larmes, la sueur, le sperme, l'urine, les selles, le lait, le liquide céphalo-rachidien, le liquide interstitiel, un fluide isolé de moelle osseuse, un mucus ou fluide du tractus respiratoire, intestinal ou génito-urinaire, des extraits cellulaires, des extraits de tissus et des extraits d'organes. Ainsi, Le fluide biologique peut être tout fluide naturellement sécrété ou excrété d'un corps humain ou animal ou tout fluide récupéré, à partir d'un corps humain ou animal, par toute technique connue de l'homme du métier telle qu'une extraction, un prélèvement ou un lavage. Les étapes de récupération et d'isolement de ces différents fluides à partir du corps humain ou animal sont réalisées préalablement à la mise en oeuvre du procédé selon l'invention.

Différentes variantes peuvent être utilisés pour la mise en contact lors de l'étape (i) du procédé selon l'invention. Ainsi, on peut plonger le matériau selon l'invention dans le flux liquide, déposer sur ledit matériau un certain volume de flux liquide, mettre ledit matériau en présence du flux gazeux (expositions statiques) ou faire circuler le flux notamment gazeux sur ledit matériau (exposition dynamique).

La détection lors de l'étape (ii) selon l'invention peut être réalisée notamment par mesures optique, massique (notamment à l'aide d'une balance à quartz), ou acoustique (notamment à l'aide d'ondes de Love). Avantageusement, cette détection est effectuée en mesurant la variation d'absorbance, de fluorescence, de luminescence, de masse ou de fréquence de résonance du matériau selon l'invention lorsqu'il est exposé à un flux contenant le (ou les) composé(s) chimique(s) tel(s) que précédemment défini(s). Lorsque la détection est réalisée par mesure optique, on choisit de préférence la longueur d'onde pour laquelle l'absorbance, la fluorescence ou la luminescence de la molécule-sonde, ou du produit formé par l'interaction ou la réaction entre la molécule-sonde et un composé chimique détecté est la plus élevée.

La mesure obtenue comparée à la mesure obtenue à partir de flux calibrés de composés chimiques connus donne directement une information sur la quantité et/ou la nature du (ou des) composé(s) chimique(s) contenu(s) dans le flux d'exposition.

Ainsi, les expositions d'un matériau selon l'invention à un échantillon liquide peuvent donner lieu à une observation visuelle, photographique ou via un scanner. Dans ce cas, une comparaison de l'intensité de la coloration développée avec celles préalablement établies lors d'un étalonnage pour une gamme prédéfinie de concentrations, permet de déduire grossièrement la concentration du composé chimique. Pour une mesure quantitative fine, une mesure de la variation d'absorption en un point ou sur une gamme spectrale large en fonction du temps de contact est nécessaire afin de déterminer une vitesse de formation du complexe coloré. La valeur de cette vitesse sera comparée à celles obtenues pour une gamme étalon dans les mêmes conditions.

La présente invention concerne enfin un système de piégeage et/ou de détection comprenant au moins un matériau sol-gel poreux comprenant au moins une molécule-sonde selon l'invention. Le système de piégeage et/ou de détection selon l'invention comprend en outre au moins un élément choisi dans le groupe constitué par un système millifluidique pour l'écoulement gazeux ; une chambre d'exposition éventuellement étanche, munie de fenêtres optiques et éventuellement d'ouvertures pour le système millifluidique dans laquelle le matériau sol-gel poreux selon l'invention est placé et mis en contact avec le flux à analyser ; un système de maintien du matériau sol-gel poreux selon l'invention ; un dispositif d'irradiation tel que lampe, LED, diode laser, etc.) ; éventuellement un système optique de collimation et de focalisation de la lumière d'analyse ; éventuellement des moyens aptes à véhiculer la lumière tels que des fibres optiques ; et un détecteur tel que spectromètre, barrette de diode, diode électroluminescente, photodiode, filtre interférentiel, photomultiplicateur avantageusement refroidis etc.

Dans le cadre d'un procédé de piégeage, de détection et/ou de quantification via une comparaison colorimétrique, le système de piégeage et/ou de détection selon l'invention employé peut uniquement comprendre, en plus du matériau sol-gel, une chambre d'exposition munie de fenêtres optiques telle qu'une plaque multipuits 96 ou 384 puits à fond plat et transparent. Le matériau sol-gel selon l'invention est déposé au centre d'un puits et un volume adéquat de la solution à tester (de 5 à 100 µL, notamment de 10 à 50 µL et, en particulier 20 µL) est déposé directement sur celui-ci à l'aide d'une micropipette. Après un temps de révélation identique à celui de la gamme d'étalonnage colorimétrique utilisée, on procède à la lecture comparative. Cette durée de révélation est choisie de préférence dans la zone où la réaction est presque terminée, c'est-à-dire généralement entre 10 et 60 min et notamment 20 min.

Dans le cadre d'un procédé de piégeage, de détection et/ou de quantification via une mesure spectrale, le système de piégeage ou de détection selon l'invention comprend, en plus du matériau sol-gel, un dispositif d'irradiation (lampe, LED, diode laser, etc.), éventuellement un système optique de collimation et de focalisation de la lumière d'analyse, éventuellement des moyens aptes à véhiculer la lumière tels que des fibres optiques, un détecteur tel qu'un spectromètre notamment un spectromètre miniature pour le domaine du visible, OceanOptics QE65000 ou un autre type de détecteur, une barrette de diode, une photodiode, un photomultiplicateur, etc. et une chambre d'exposition. A titre d'exemple particulier d'un tel système, la chambre d'exposition est constituée d'une plaque multipuits possédant un fond transparent même dans le domaine de l'UV (plaques Greiner Bio-One, réf. : 781091 (384 puits), réf. : 655087 (96 puits) ou réf. : 675096 (96 demi-puits)). Cette plaque est placée sur un dispositif de translation XY permettant d'amener précisément le faisceau optique au centre du matériau sol-gel selon l'invention afin de sonder sur une épaisseur la plus homogène possible. La plaque de translation est également munie d'un dispositif d'injection de liquide qui permet de déposer un volume précis du liquide à analyser dans le puits contenant le matériau sol-gel. A titre d'exemple particulier, on peut utiliser des plaques 384 puits dont la taille est parfaitement compatible avec la taille des matériaux sol-gel poreux, secs, synthétisés dans des plaques 96 puits. Le matériau sol-gel est déposé au centre d'un des puits de la plaque et un volume adéquat de la solution à tester (de 5 à 50 µL, notamment de 10 à 30 µL et, en particulier 20 µL) est déposé directement sur celui-ci à l'aide du système d'injection de liquide. A partir de cet instant, on enregistre des spectres successifs de la zone centrale du matériau (soit sur environ 1 mm de diamètre). L'intervalle d'acquisition entre les spectres est compris entre 1 et 20 sec et est plus particulièrement égal à 1, sec (avec une durée de moyennage des spectres de 800 ms). Pour une mesure précise de la vitesse de réaction i.e. de la pente à l'origine correspondant à la variation d'absorbance du complexe formé, en fonction du temps, une collecte des valeurs d'absorbance au cours des 1 à 10 premières minutes est amplement suffisante. Cette durée est variable selon la concentration à détecter ; plus celle-ci est faible et plus la durée d'acquisition devra être longue pour l'obtention d'une mesure d'absorbance suffisamment précise. La précision de la mesure dépendra de l'appareillage utilisé et en particulier du rapport signal sur bruit des barettes de diodes ou des photomultiplicateurs employés. En comparant la valeur de l'absorbance mesurée à un temps donné à une courbe d'étalonnage préalablement effectuée, il est possible de déterminer la concentration de l'analyte dans la solution.

Afin d'utiliser les mêmes systèmes que les deux systèmes particuliers présentés ci-dessus pour des analyses de composés chimiques dans une phase gazeuse, on pourra utiliser les mêmes systèmes tels que des plaques multipuits en rajoutant un couvercle étanche permettant une exposition des matériaux à un flux gazeux.

Dans le cadre d'un procédé mettant en oeuvre un flux gazeux, on peut envisager une exposition statique au cours de laquelle le matériau sol-gel selon l'invention est simplement mis en contact passif avec l'atmosphère contenant le (ou les) composé(s) chimique(s) visé(s).

L'exposition statique peut être réalisée soit en vase clos dans un volume prédéterminé, soit en atmosphère ouverte. Le vase clos peut correspondre à un prélèvement ponctuel pendant lequel la concentration en composé(s) chimique(s) n'aura que très peu évolué. Ce type d'exposition implique donc une étape préalable à l'étape (i) du procédé selon l'invention consistant en un prélèvement. L'étape (i) du procédé selon l'invention peut être immédiate ou reportée dans le temps par rapport au prélèvement (cas de l'analyse en laboratoire). L'exposition statique en vase clos peut aussi correspondre à l'exposition du matériau sol-gel poreux selon l'invention dans un volume fixe dans lequel la concentration en composé(s) chimique(s) peut augmenter au cours du temps (cas d'une culture de bactéries relargant de l'indole). L'exposition statique en atmosphère ouverte est représentative de l'exposition réelle à laquelle un individu ou une chose est soumis.

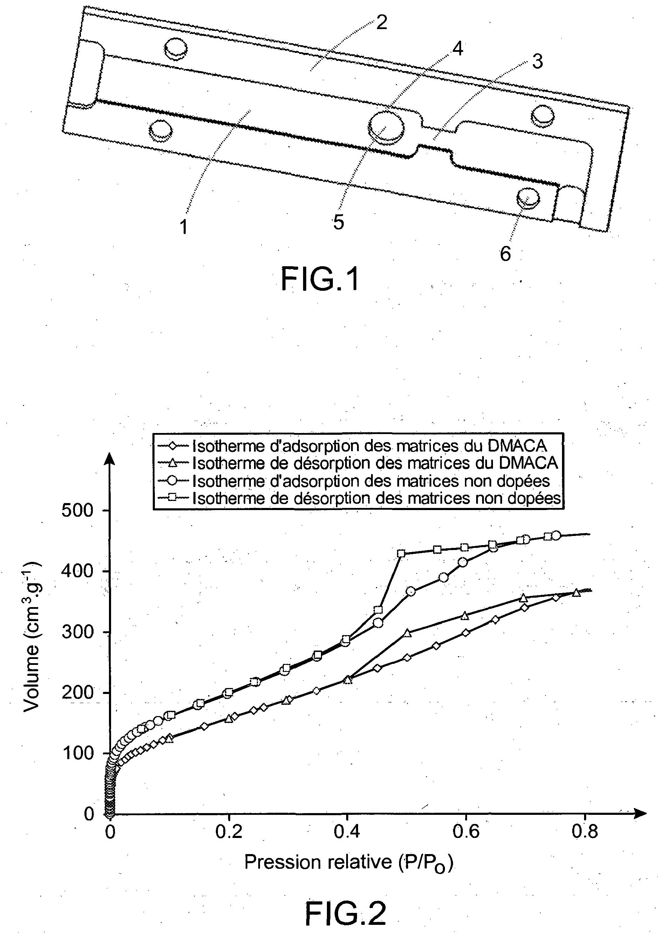

Dans ces 2 cas d'exposition statique, le système de détection nécessite, en outre, un moyen de maintien du matériau sol-gel identique à celui utilisé pour déterminer la courbe ou la gamme colorimétrique d'étalonnage. Ce système de piégeage et/ou de détection est présenté Figure 1. Avantageusement, un tel système comprend un circuit fluidique de passage du flux gazeux (1), une plaque en métal ou en plastique (2), un goulet d'étranglement permettant le blocage du capteur (3), l'emplacement où se trouvera le matériau sol-gel selon l'invention (4), un orifice pour le passage du faisceau optique de mesure (5) et des vis de maintien des 2 plaques entre elles (6). Ce système comprend, de plus, un système optique de collimation et focalisation de la lumière d'analyse, des moyens aptes à véhiculer la lumière tels que des fibres optiques et un détecteur tels que précédemments définis.

La mesure de l'absorbance du complexe coloré mettant en oeuvre un tel système de piégeage et/ou de détection peut être réalisée sur une large gamme de longueur d'onde, soit limitée à une ou deux longueurs d'onde fixées respectivement au maximum et au minimum d'absorption d'une ou de la bande d'absorption du complexe dans le matériau sol-gel poreux. La mesure peut enfin être une mesure de nuance colorimétrique ou une appréciation visuelle de cette nuance.

En variante, dans le cadre d'un procédé mettant en oeuvre un flux gazeux, on peut envisager une exposition dynamique qui consiste à faire circuler à un débit fixé, l'atmosphère contenant le (ou les) composé(s) chimique(s) visé(s) directement sur le matériau sol-gel poreux selon l'invention. Dans ce cas, il s'agit de déterminer une concentration précise dans des conditions opératoires identiques à celles utilisées pour la détermination de la courbe de calibration.

Dans cette variante, le système de piégeage et/ou de détection selon l'invention comprend avantageusement :
- un système millifluidique pour l'écoulement gazeux permettant avantageusement un débit de 0,01 à 1,1 L.min⁻¹ ;
- une chambre d'exposition munie de fenêtres optiques et d'ouvertures pour le système millifluidique (entrée et sortie de gaz) ;
- un système optique de collimation et focalisation de la lumière d'analyse ;
- des moyens aptes à véhiculer la lumière tels que des fibres optiques ;
- une (micro)pompe adaptée au débit désiré ;
- un détecteur tel que précédemment défini.

Un tel système de piégeage et/ou de détection peut être utilisé notamment comme présenté ci-après. Le matériau sol-gel poreux selon l'invention est déposé entre les deux plaques comme représentées Figure 1 sur le trajet optique. L'étranglement du circuit millifluidique permet le maintien en bonne position du matériau. L'ensemble est inséré dans un porte-échantillon en Téflon équipé de deux fenêtres optiques en quartz. L'entrée et la sortie optiques du porte-échantillon sont reliées via des connecteurs de type SMA à des fibres optiques reliées d'une part à la source lumineuse et d'autre part au détecteur. Le matériau sol-gel est inséré dans le système millifluidique. Ce dernier est placé dans la chambre d'exposition. On fait circuler le flux gazeux dans le système millifluidique pendant un temps déterminé et suffisant pour observer des variations optiques notables (de quelques secondes à une heure environ). Pendant la durée de l'exposition, le spectre d'absorption du matériau sol-gel est collecté à intervalles de préférence réguliers (1 à 300 secondes) de la manière décrite ci-après. La lumière d'analyse provenant d'une lampe visible (tungstène) est véhiculée à l'aide d'une fibres optique vient éclairer en continu la fenêtre d'entrée de la chambre. Le faisceau de lumière, collimaté à l'aide d'une lentille (focale=10 mm) et d'un connecteur SMA placé sur la fenêtre d'entrée, vient éclairer le capteur sur une petite surface (typiquement de l'ordre de 1 mm²). La lumière transmise est collectée dans le même axe via une seconde lentille et un second connecteur SMA placé sur la fenêtre de sortie de la chambre. Le faisceau de lumière transmis est véhiculé à l'aide d'une fibre optique vers un spectrophotomètre éventuellement miniature. Un spectre d'absorption du capteur est collecté à intervalles réguliers, chaque acquisition durant de 8 à 1000 msec (notamment 800 msec).

Le signal d'absorbance du matériau sol-gel poreux exposé à chaque polluant est acquis sur une large gamme de concentration du composé chimique et sur une large gamme d'humidité relative du flux gazeux. A partir de ces données, des courbes de calibration sont établies pour chaque composé chimique en fonction de sa concentration et de l'humidité du flux gazeux. Ces courbes de calibration sont stockées dans une banque de données qui servira à la déconvolution spectrale d'un spectre du matériau sol-gel poreux exposé à un mélange inconnu de composés chimiques gazeux.

En fonction de la molécule-sonde choisie, il est possible de faire une détection sélective d'un composé chimique tel que précédemment défini et notammment d'un dérivé indolique et de s'affranchir de l'interférence des autres en choisissant la meilleure molécule-sonde parmi la liste des cinq molécules-sonde mises en oeuvre dans le cadre de l'invention (à savoir DMACA, DMABA, MON, MOB ou acide croconique).

De plus, en jouant sur les paramètres de synthèse du matériau sol-gel et le mode d'incorporation de la molécule-sonde, il est possible d'adapter la taille des pores à celle de l'analyte visé et donc d'effectuer un second « screening » vis-à-vis des interférents gênants. La partie expérimentale ci-après propose un exemple de matériau sol-gel poreux qui est insensible au tryptophane, ce dernier ne pouvant entrer dans les pores du matériau et qui permet de détecter et de distinguer l'indole et le scatole. Ce point est important car l'indole et le scatole sont formés à partir du tryptophane dans les milieux biologiques. Le tryptophane est un interférent important en microbiologie.

De même, en modifiant les conditions de synthèse ou la concentration en molécule-sonde incorporée dans le matériau, il est possible de déplacer la gamme de détection des plus basses concentrations vers les plus hautes concentrations en maintenant globalement une gamme de linéarité de réponse sur 3 ordres de grandeur (par défaut de 1.10⁻⁶ à 1.10⁻³ mol.L⁻¹ d'indole). Le DMACA permet de bien discriminer le scatole et l'indole mais le seuil de sensibilité est obtenu pour une concentration égale à ∼10⁻⁶ mol.L⁻¹. Le DMABA, plus soluble dans l'alcool, peut être incorporé en plus grande quantité dans le matériau sol-gel et permet donc d'atteindre un niveau de sensibilité plus élevé. On peut donc par exemple utiliser un kit avec ces deux molécules-sonde, en mélange dans un même matériau sol-gel ou dans deux matériaux sol-gel distincts pour faciliter la lecture à l'oeil nu (les couleurs des molécules-sonde ne sont ainsi pas supersposées pour l'utilisateur), pour l'obtention de la sélectivité et de la sensibilité.

En outre, la formation du complexe coloré est environ 3 fois plus rapide dans les pores du matériau qu'en phase liquide. Dans le cas de l'indole, et de certains de ses dérivés, ledit complexe est un sel d'azafulvénium, le tryptophane ne forme pas un tel complexe. Avec le procédé de l'invention, ce complexe est le seul formé alors qu'en phase liquide un 2^{nd} produit de réaction peut être formé à partir du 1^{er} complexe avec addition d'une 2^{nde} molécule d'indole. Dans la littérature, la 2^{nde} réaction n'est pas prise en compte dans le dosage en phase liquide et conduit à des erreurs systématiques d'estimation des concentrations d'indole. Le sel d'azafulvénium formé est stable dans le matériau sol-gel puisque la 2^{ème} réaction n'a pas lieu.

D'autres caractéristiques et avantages de la présente invention apparaîtront encore à la lecture des exemples ci-après donnés à titre illustratif et non limitatif.

### BRÈVE DESCRIPTION DES DESSINS

La Figure 1 présente un schéma d'une des 2 faces du dispositif de maintien d'un matériau sol-gel poreux comprenant au moins une molécule-sonde selon l'invention permettant leur exposition à un échantillon gazeux ainsi que les mesures d'absorption.

La Figure 2 présente les isothermes d'adsorption (○) et de désorption (□) de l'azote à 77 K sur les matrices non dopées et sur les matrices dopées DMACA (adsorption ◇ et désorption Δ) « à saturation » selon l'invention.

La Figure 3 présente les graphiques représentant la contribution des pores de différentes tailles au volume poreux (à gauche) et à la surface spécifique (à droite). Les matrices non dopées sont représentées en noir (■) et les matrices dopées de DMACA en blanc (□). Les résultats ont été obtenus à partir de la méthode de calcul DFT (Neimark A. V., Ravikovitch P. I., Vishnyakov A., "Bridging scales from molecular simulations to classical thermodynamics: density functional theory of capillary condensation in nanopores", J. Phys.: Condens. Matter, vol. 15, pp. 347-365, 2003).

La Figure 4 présente les résultats de tests colorimétriques pour le dosage de l'indole dans différentes matrices poreuses dopées de DMACA et de DMABA selon l'invention.

La Figure 5A présente l'évolution spectrale observée au cours du temps lors de l'ajout de 20 µL d'une solution d'indole dans une matrice sol-gel dopée de DMACA selon l'invention et la Figure 5B présente la cinétique de formation du complexe coloré à 624 nm.

La Figure 6 présente la courbe d'étalonnage pour la détection d'indole en milieu liquide. L'abscisse correspond au logarithme de la concentration d'indole (entre 10⁻⁶ à 10⁻³ mol.L⁻¹) et l'ordonnée à la vitesse de formation du complexe coloré.

La Figure 7 présente la variation spectrale obtenue lors de l'exposition d'une matrice dopée de DMACA selon l'invention à des vapeurs de scatole.

### EXPOSÉ DÉTAILLÉ DE MODES DE RÉALISATION PARTICULIERS

### I. Préparation d'une matrice mésoporeuse selon la présente invention.

### I.1. Matériel utilisé.

Les différents échantillons de matrices mésoporeuses ont été synthétisés à partir des deux précurseurs que sont le TMOS et l'APTES. Le solvant et l'acide utilisés lors de cette synthèse sont du méthanol et de l'acide chlorhydrique à 37% (12 mol.L⁻¹) respectivement. Le protocole présenté met en oeuvre le DMACA comme molécule-sonde.

Plus particulièrement, pour une préparation de 20 mL de sol dopé « à saturation » par du DMACA et avec une concentration de 6 mol.L⁻¹ d'HCl, sont utilisés :
- du TMOS (Fluka, réf. 09324): 3,4 mL ;
- du méthanol (Fluka, réf. 87680) + du DMACA (Sigma-Aldrich, réf. 156477): 4,7 mL + 70 mg ;
- de l'APTES (Aldrich, réf. 440140): 0,2 mL ;
- de l'eau ultrapure: 1,7 mL
- de l'acide chlorhydrique 12 mol.L⁻¹ : 10 mL.

### 1.2. Préparation du sol.

La première étape de la synthèse consiste au mélange à l'agitateur magnétique du TMOS et du méthanol contenant le DMACA dissous pendant 2 min dans un bêcher en pyrex placé dans un bain à -15°C ± 5°C (mélange éthanol/carboglace ou éthanol/azote liquide). La quantité voulue d'APTES est ensuite ajoutée au mélange à l'aide d'une micropipette. Après 2 min supplémentaires d'agitation, l'eau déionisée est ajoutée. Après 30 sec d'agitation, on procède à l'ajout lent de l'acide chlorhydrique puis à la mise en forme des matrices.

### 1.3. Mise en forme et séchage des matrices sol-gel.

Le NH₂TEOS et l'acide chlorhydrique modifient les conditions initiales de pH du sol et catalysent la gélification, il faut donc procéder à la mise en forme le plus rapidement possible en maintenant le sol le plus possible à -15°C ± 5°C.

A l'aide d'une micropipette, on met le volume de sol adéquat dans un puits d'une plaque de 96 multipuits de préférence en polystyrène (Greiner Bio-one, Elisa-microplates flat bottom, réf. 655001) ou encore en polypropylène (Greiner Bio-one, Elisa-microplates flat bottom, réf. 655201). Il convient de noter que, pour éviter que des composés se trouvant dans ou sur les plaques ne polluent les monolithes, on procède à un prétraitement des plaques comprenant un chauffage à l'étuve à 50°C pendant 24 h en renouvelant l'atmosphère de l'étuve à trois reprises pendant cette durée (remplacement par de l'azotz qualité U, de l'air industrielle qualité FID, etc.).

Des volumes de 50 à 100 µL donnent des matrices sèches d'épaisseur convenable (400-800 µm). Le facteur de rétrécissement est compris entre 12 et 16 pour un sol de départ tel que celui donné au point 1.1. Une fois que le sol est gélifié, la plaque multipuits est recouverte d'un film microporeux adhésif (Gas permeable adhesive seals, ABGene, réf. AB-0718). La plaque ainsi scellée est laissée à température ambiante, sous la hotte (dégagement possible de vapeurs d'acide au cours du séchage) jusqu'à séchage complet, soit généralement pendant 3 jours (température approximative = 22°C, humidité relative moyenne = 55%).

Après séchage, le diamètre moyen des monolithes est égal à 2,9 ± 0,2 mm. Une fois le séchage complet intervenu, les matrices se démoulent facilement et on peut les conserver dans des tubes en verre fermés hermétiquement.

Le protocole présenté ici est adaptable aux autres molécules sondes ou à leurs mélanges.

### II. Caractérisation de la matrice poreuse selon l'invention.

### II.1. Porosité

### II.1.1. Rappels.

Il est nécessaire d'obtenir les deux caractéristiques physiques fondamentales que sont la surface spécifique du matériau ainsi que la distribution en taille des pores. Ces deux paramètres réunis rendent compte de la diffusion et du piégeage des polluants à l'intérieur des matériaux.

La mesure de la surface spécifique et de la porosité d'un matériau est généralement faite à partir de la détermination expérimentale de l'isotherme d'adsorption physique d'un gaz inerte à la surface du matériau.

La méthode de Brunauer-Emmett-Teller (BET) est la méthode analytique la plus largement utilisée pour la détermination de la surface spécifique d'un matériau solide.

La méthode DFT permet de déterminer le profil de densité à l'équilibre en minimisant le potentiel d'énergie libre et cela quelle que soit la position de la molécule sur la surface ou dans le pore. A partir de ce profil, il est ainsi possible de donner une structure précise à un fluide confiné dans un pore.

### II.1.2. Mesure et comparaison avec des matrices non dopées.

### a) Matrice non dopée (à titre comparatif)

La matrice non dopée utilisée à titre de comparaison est une matrice préparée comme au point 1.1 mais sans DMACA et sans acide.

### b) Dégazage

Le xérogel à analyser est broyé en poudre fine à l'aide d'un mortier. Dans les deux cas, des monolithes ayant des épaisseurs centrales équivalentes (220 µm) ont été choisis. Comme l'opération de dégazage doit être effectuée le plus soigneusement possible, deux dégazages successifs ont été mis en oeuvre. Le premier, sous rampe à vide permet de faire un dégazage « grossier ». On chauffe pour cela l'échantillon à 100°C et on attend que le vide se stabilise à une pression de l'ordre de 5.10⁻² Torr (soit 4 h environ). Puis le second dégazage est réalisé directement sur le port dégazage du porosimètre Autosorb-1 (Quantachrome). La température est fixée à 150°C et on attend que la pression se stabilise à 5.10⁻³ Torr (soit de nouveau environ 4 h). L'élévation de température permet de faciliter le dégazage des molécules organiques et de l'eau.

Lors de ce premier dégazage, on a noté qu'au début la poudre de xérogel dopé était blanche et opaque (à cause de la diffusion de la lumière) et que sa couleur évolue au cours du dégazage vers l'orange vif opaque. Cette observation laisse à penser que les molécules-sonde de DMACA protonées se déprotonnent au cours du dégazage et qu'elles restent enfermées dans les pores dont les embouchures sont trop petites pour permettre le relargage du DMACA même dans des conditions poussées de pression et de température. Nous pouvons donc penser que lors d'une mesure, les molécules-sonde ne sortiront pas de la matrice lorsqu'elles seront mises en contact avec le milieu à analyser.

### c) Mesure

Les isothermes ont été réalisées à l'aide d'un porosimètre Autosorb-1 (Quantachrome) permettant l'utilisation de diazote à sa température normale de liquéfaction (77K) comme gaz d'adsorption.

### Isotherme d'adsorption-désorption

La Figure 2 représente les isothermes d'adsorption et de désorption obtenues, d'une part, à partir des matrices dopées avec le DMACA « à saturation » dans le solvant et, d'autre part, à partir de matrices non dopées.

La présence de micropores est révélée par la forte augmentation du volume adsorbé aux très basses pressions relatives de N₂. L'existence de mésopores est mise en évidence par la présence d'une boucle d'hystérésis à une pression relative supérieure à 0,4. De plus, la forme de la boucle d'hystérésis donne une information sur le type d'interconnexion. Dans le cas présent, nous sommes en présence de mésopores interconnectés.

Les allures des isothermes des matrices dopées et non dopées sont semblables mais on peut noter que le volume libre poreux est plus petit lorsque les pores contiennent du DMACA.

### Distribution de taille de pores

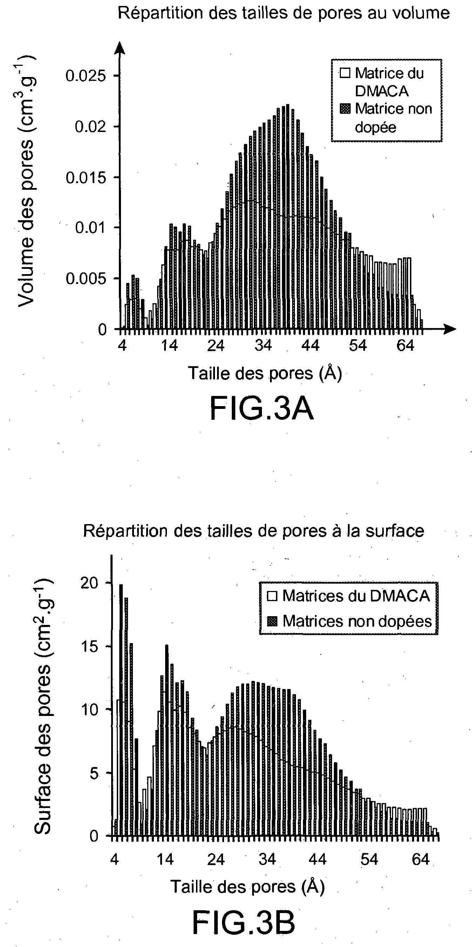

La distribution en taille des pores peut être faite de deux façons différentes soit une répartition en taille pour une contribution au volume poreux soit pour une contribution à la surface spécifique. Les histogrammes présentés sur la Figure 3 font apparaître ces deux types de répartition.

On remarque que conformément aux conclusions tirées de l'étude des isothermes d'adsorption-désorption que les deux matrices possèdent une faible population de micropores de diamètre inférieur à 20 Å et beaucoup de mésopores de diamètre compris ici entre 20 et 70 Å. De plus, il est à noter que les mésopores participent au volume poreux total et à la surface respectivement pour environ 85% et 64% pour les deux types de matrices étudiées. L'intégralité des résultats précédents est synthétisée dans le Tableau 1 ci-après.

**Tableau 1 : Comparaison des surfaces spécifiques et volumes poreux d'une matrice non dopée et d'une matrice dopée avec du DMACA concentré**

| | Matrice non dopée | Matrice dopée avec DMACA "à saturation" |
|---|---|---|
| S_{spéc BET} (m²·g⁻¹) | 760 ± 32 | 610 ± 30 |
| S_{micropores} (m²·g⁻¹) | 170 ± 7 | 130 ± 7 |
| V_{por total} (cm³.g⁻¹) | 0,673 | 0,523 |

### II.3. Conclusions.

Le procédé selon l'invention utilisant de fortes concentrations d'acide permet l'incorporation dans une synthèse sol-gel d'une grande quantité de molécules-sonde protonées.

Les résultats des tests de caractérisation prouvent que les conditions opératoires mises en oeuvre ici permettent de conserver une matrice poreuse ayant une grande surface spécifique et une répartition en taille de pores compatible avec la taille des analytes visés (indole, scatole). De plus, la durée (20 min) de la synthèse qui inclut la préparation du sol et le temps de gélification du matériau reste compatible avec une étape d'industrialisation. L'étape de séchage peut durer 24 h si les pastilles de gel sont démoulées immédiatement après gélification ou 3 jours si le matériau est conservé dans son récipient.

Pour finir, l'utilisation de plaques multipuits (96 puits) permet d'obtenir des matrices de taille et de forme reproductibles (disques de 2,9 mm de diamètre et épaisseur variable de 400 à 800 µm en fonction du volume de sol utilisé lors du remplissage des puits) induisant une variabilité inter-lots la plus faible possible.

### III. Utilisation des matrices dopées selon l'invention.

Afin de montrer l'intérêt de l'invention, des mesures de détection sont présentées ci-après pour deux molécules-sonde.

### III.1. Tests colorimétriques en phase gazeuse et en phase liquide.

### III.1.1. Exposition à des solutions contenant de l'indole

Pour chaque molécule sonde (DMACA ou DMABA), 12 matrices contenant la concentration optimale de réactif (saturation de la solution de molécules sonde) et 12 matrices contenant les mêmes réactifs à une concentration 5 fois plus faible ont été synthétisées selon un procédé tel que décrit au point I.2. Les volumes en µL (70, 80 et 90) correspondent aux volumes initiaux de sol versés dans les puits. Après gélification du sol et séchage des matrices, les épaisseurs des matrices obtenues sont proportionnelles aux volumes initiaux de sol. Quatre solutions d'indole à différentes concentrations (10⁻¹, 10⁻⁵, 10⁻⁴ et 10⁻³ mol.L⁻¹) ont été préparées. Vingt µL de chaque solution sont déposés dans 6 puits se différenciant par la concentration de la molécule sonde et l'épaisseur de la matrice.

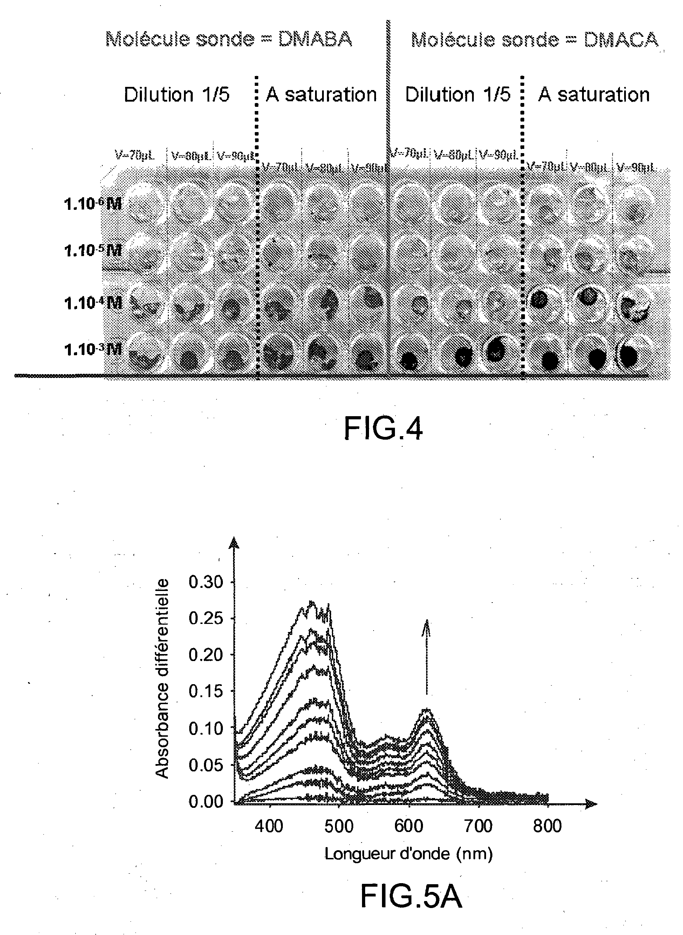

On note Figure 4 que, pour une même concentration d'indole, plus les matrices sont épaisses et plus la coloration (rouge lorsque la molécule-sonde est le DMABA et verte lorsque la molécule-sonde est le DMACA) est intense. Par ailleurs, la coloration s'intensifie également lorsque la concentration d'indole augmente. Ces résultats sont attendus puisque l'absorbance des produits, en l'occurrence des sels d'azafulvénium est proportionnelle au parcours optique (épaisseur de la matrice) et à la concentration du produit issu de la réaction de l'indole avec le DMABA ou DMACA protoné et présent en excès dans la matrice.

Un des points les plus importants de cette expérimentation est la sensibilité qui peut être obtenue pour un test visuel grâce au changement de couleur dans le domaine du visible, qui est de 10⁻⁶ mol.L⁻¹ pour l'indole.

### III.1.2. Exposition à des solutions contenant du scatole ou du tryptophane

De la même façon que précédemment, si on fait réagir des solutions liquides contenant du scatole ou du tryptophane avec des capteurs dopés de DMACA ou de DMABA, on obtient les variations de coloration suivante :
- capteur DMACA et scatole → passage du orange pâle au violet
- capteur DMACA et tryptophane → pas de variation de coloration (reste orange pâle)
- capteur DMABA et scatole → passage du jaune au violet
- capteur DMACA et tryptophane → pas de variation de coloration (reste jaune)

Nous pouvons conclure de cette expérience que les capteurs dopés de DMACA ou de DMABA préparés comme exposés au point I.2 ne réagissent pas avec l'interférent potentiel qu'est le tryptophane lors des mesures.

De plus, il apparaît que la discrimination du scatole et de l'indole est possible par cette méthode étant donné que les produits formés ont des couleurs nettement différentes : avec le DMACA respectivement violet et vert ; avec le DMABA respectivement violet et rose.

### III.2. Exposition à une gamme de concentration d'indole en phase liquide.

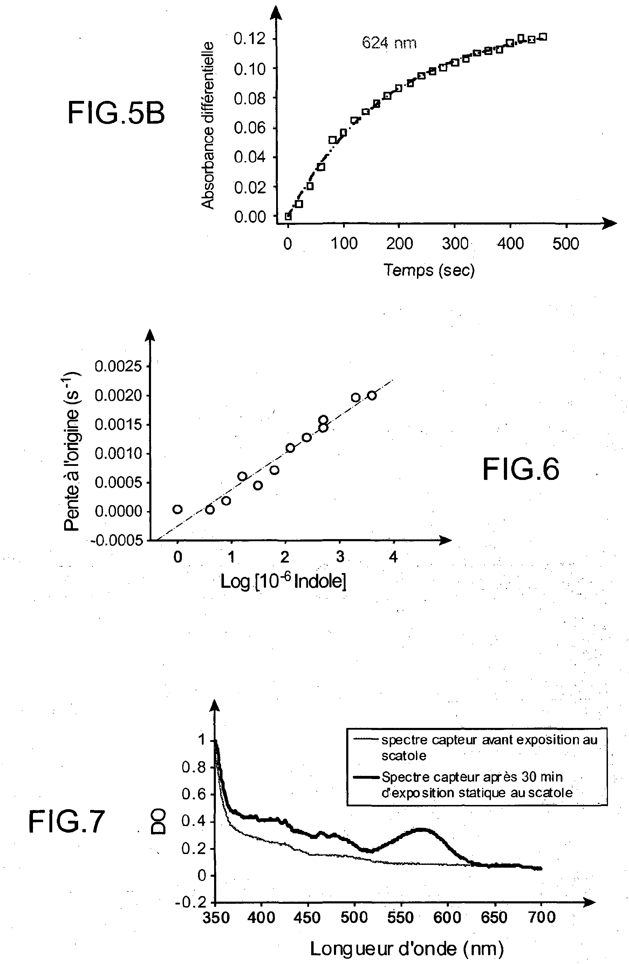

L'exemple ci-dessous montre les résultats obtenus lors d'une exposition d'un capteur dopé de DMACA (à 20% de la saturation dans le méthanol - Épaisseur = 800 µm) à 20 µL d'une solution d'indole à 6,3.10⁻⁵ mol.L⁻¹, déposée directement sur le capteur. La Figure 5A représente l'évolution spectrale du capteur au cours du temps et la Figure 5B représente l'évolution de la différence d'absorption à la longueur d'onde de 624 nm.

En déterminant la valeur de la pente à l'origine, c'est-à-dire la vitesse initiale de réaction sur le graphique de la Figure 5B et en répétant cette même opération pour différentes concentrations d'indole, il est possible de tracer une courbe d'étalonnage telle que celle présentée Figure 6.

### III.3. Exposition en phase gazeuse.

L'exposition d'une matrice dopée de DMACA à de l'indole en phase gazeuse induit le même changement spectral qu'en phase liquide (voir Figure 5).

Un exemple d'exposition au scatole dans la phase gazeuse est montré Figure 7. Le complexe formé par la réaction du scatole avec le DMACA n'absorbe pratiquement pas à 624 nm, longueur d'onde correspondant au maximum d'absorption du complexe formé avec l'indole. Il est donc aisé de discriminer les deux polluants et d'obtenir une mesure quantitative de chaque constituant dans un mélange.

### RÉFÉRENCES

[1] Demande de brevet japonais 2006258803 de Tatsuya publié le 28 septembre 2006.
[2] Article de Wood et al., 2003, Mycologica, vol. 95(5), pages 807-808.
[3] Article de Curioni et Bosset, 2002, International Dairy Journal, vol. 12, pages 959-984.
[4] Article de Lombard et Dowell, 1983, Journal of Clinical Microbiology, vol.18(3), pages 609-613.
[5] Article de Miller et Wright, 1982, Journal of Clinical Microbiology, vol.15(4), pages 589-592.
[6] Article de Turner, 1961, Biochemical Journal, vol. 78, pages 790-792.
[7] Article de Kohno et al., 2009, Analytical Sciences, vol. 25, pages 129-132.
[8] Article de Volkl et Quadbeck, 1973, Arztl. Lab., vol. 19, pages 535-536.
[9] Article de Qureshi et Qureshi, Analytical Chemistry, vol. 38(13), pages 1956-1958.
[10] Article de Durkee et Stirbois, Journal of Chromatology, vol. 13, pages 173-180.
[11] Article de Vracko et Sherris, 1963, American Journal of Clinical Pathology, vol. 39, pages 429-432.
[12] Article de Kohno et al., 2007, Chemistry Letters, vol. 36(1), pages 98-99.
[13] Demande internationale WO 2006/107370 de Mac Donald publiée le 12 octobre 2006.

## Revendications

1. Matériau sol-gel poreux comprenant au moins une molécule-sonde choisie dans le groupe constitué par l'acide croconique, le *p*-diméthylaminobenzaldéhyde (DMABA), le *p*-diméthylaminocinnamaldéhyde (DMACA), le *p*-méthoxybenzaldéhyde (MOB) et le 4-méthoxy-1-naphtaldéhyde (MON) **caractérisé en ce que** ledit matériau sol-gel a un pH intrinsèque inférieur à 1 et notamment, un pH intrinsèque inférieur à 0 et **caractérisé en ce que** ledit matériau sol-gel est essentiellement préparé à partir :
(1) d'un mélange :
- d'au moins un alcoxysilane de formule Si(OR¹)₄ ou R₂Si(OR³)₃ dans lesquelles R¹, R² et R³, identiques ou différents, représentent un groupement alkyle de 1 à 6 atomes de carbone et
- d'au moins un alcoxysilane de formule R⁴Si(OR⁵)₃ ou (R⁶O)₃Si-CH₂-CH₂-Si(OR⁷)₃ dans lesquelles R⁴ représente un groupement alkyle de 1 à 6 atomes de carbone substitué et R⁵, R⁶ et R⁷, identiques ou différents, représentent un groupement alkyle de 1 à 6 atomes de carbone,
le rapport molaire alcoxysilane(s) de formule Si(OR¹)₄ ou R²Si(OR³)₃/ alcoxysilane(s) de formule R⁴Si(OR⁵)₃ ou (R⁶O)₃Si-CH₂-CH,-Si(OR⁷)₃ étant compris entre 1/0,02 et 1/0,80 ; ou
(2) d'un seul alcoxysilane de formule (R⁶O)₃Si-CH₂-CH₂-Si(OR⁷)₃ dans laquelle R⁶ et R₇, identiques ou différents, représentent un groupement alkyle de 1 à 6 atomes de carbone ; ou
(3) d'un mélange :
- d'au moins un alcoxysilane de formule (R⁶O)₃Si-CH₂-CH₂-Si(OR⁷)₃ dans laquelle R⁶ et R⁷, identiques ou différents, représentent un groupement alkyle de 1 à 6 atomes de carbone, et
- d'au moins un alcoxysilanes de formule Si(OR¹)₄, R²Si(OR³)₃ ou R⁴Si(OR⁵)₃ dans lesquelles R¹, R² et R³, identiques ou différents, représentent un groupement alkyle de 1 à 6 atomes de carbone, R⁴ représente un groupement alkyle de 1 à 6 atomes de carbone substitué et R⁵ représente un groupement allyle de 1 à 6 atomes de carbone,
le rapport molaire alcoxysilane(s) de formule (R⁶O)₃Si-CH₂-CH₂-Si(OR⁷)₃/ alcoxysilane(s) de formule Si(OR¹)₄, R²Si(OR³)₃ ou R⁴Si(OR⁵)₃ étant compris entre 1/1,25 et 1/50 ;
R⁴ étant un groupement alkyle de 1 à 6 atomes de carbone substitué par un ou plusieurs éléments choisi(s) dans le groupe constitué par un halogène, un radical -NH₂, un radical -NHR⁸ avec R⁸ représentant un groupement alkyle de 1 à 6 atomes de carbone, un radical -GOOH, un radical -COOR⁹ avec R⁹ représentant un groupement alkyle de 1 à 6 atomes de carbone.

2. Matériau sol-gel selon la revendication 1, **caractérisé en ce que** ledit alcoxysilane de formule Si(OR¹)₄ ou R²Si(OR³)₃ est choisi dans le groupe constitué par le tétraméthoxysilane (TMOS, Si(OCH₃)4), le tétraéthoxysilane (TEOS, Si(OC₂H₅)₄), le tétrapropoxysilane (TPOS, Si(OC₃H₇)₄), le tétrabutoxysilane (TBOS, Si(OC₄H₉)4), le méthyltriméthoxysilane (MTMOS, (CH₃)Si(OCH₃)₃), l'éthyltriméthoxysilane (ETMOS, (C₂H₅)Si(OCH₃)₃), le propyltriméthoxysilane (PTMOS, (C₃H₇)Si(OCH₃)₃), le méthyltriéthoxysilane (MTEOS, (CH₃)Si(OC₂H₅)₃), l'éthyltriéthoxysilane (ETEOS, (C₂H₅)Si(OC₂H₅)₃), le le propyltriéthoxysilane (PTEOS, (C3H₇)Si(OC₂H₅)₃) et leurs mélanges.

3. Matériau sol-gel selon la revendication 1 ou 2, **caractérisé en ce que** ledit alcoxysilane de formule R⁴Si(OR⁵)₃ ou (R⁶O)₃Si-CH₂-CH₂-Si(OR⁷)₃ est choisi dans le groupe constitué par le 3-aminopropyltriéthoxysilane (APTES, Si(C₃H₆NH₂)(OC₂H₅)3), le 3-aminopropyltriméthoxysilane (APTMS, Si(C₃H₆NH₂)(OCH₃)₃), le (3-(méthylamino)propyl)triméthoxysilane (Si(C₃H₆NHCH₃) (OCH₃)3), le 3-carboxypropyltriéthoxysilane (Si(C₃H₆CO₂H)(OC₂H₅)₃), le 3-carboxypropyltriméthoxysilane (Si(C₃H₆CO₂H)(OCH₃)₃), le 1,2-bis(triéthoxysilyl)éthane ((OC₂H₅)₃Si-CH₂-CH₂-Si(OC₂H₅)₃), le 1,2-bis(triméthoxysilyl)éthane ((OCH₃)₃Si-CH₂-CH₂-Si(OCH₃)₃), le (3,3,3-trichloropropyl) triéthoxysilane (Si(C₂H₅CCl₃)(OC₂H₅)₃) et le 3,3,3-trifluoropropyl-triméthoxysilane (Si(C₂H₅CF₃)(OCH₃)₃) et leurs mélanges.

4. Procédé de préparation d'un matériau sol-gel poreux selon l'une quelconque des revendications 1 à 3, comprenant les étapes successives suivantes consistant à :
a₁) mélanger au moins un alcoxysilane de formule Si(OR¹)₄ ou R²Si(OR³)₃ tel que défini à la revendication 1 ou 2 avec un solvant et au moins une molécule-sonde choisie dans le groupe constitué par l'acide croconique, le DMABA, le DMACA, le MOB et le MON ;
b₁) ajouter au mélange de l'étape (a₁) au moins un alcoxysilane de formule R⁴Si(OR⁵)₃ ou (R⁶O)₃Si-CH₂-CH₂-Si(OR⁷)₃ tel que défini à la revendication 1 ou 3 ; le rapport molaire alcoxysilane(s) de formule Si(OR¹)₄ ou R²Si(OR³)₃/ alcoxysilane(s) de formule R⁴Si(OR⁵)₃ ou (R⁶O)₃Si-CH₂-CH₂-Si(OR⁷)₃ étant compris entre 1/0,02 et 1/0,80 ;
c₁) ajouter au mélange de l'étape (b₁) de l'eau puis un acide ;
d₁) mettre en forme le sol obtenu suite à l'étape (c₁) pour obtenir le matériau sol-gel, comprenant au moins une molécule-sonde.

5. Procédé de préparation d'un matériau sol-gel poreux selon la revendication 1, comprenant les étapes successives suivantes consistant à :
a₂) mélanger au moins un alcoxysilane de formule (R⁶O)₃Si-CH₂-CH₂-Si(OR⁷)₃ tel que défini à la revendication 1 ou 3 avec un solvant et au moins une molécule-sonde choisie dans le groupe constitué par l'acide croconique, le DMABA, le DMACA, le MOB et le MON ;
b₂) éventuellement ajouter au mélange de l'étape (a₂) au moins un alcoxysilane de formule Si(OR¹)₄, R²Si(OR³)₃ ou R⁴Si(OR⁵)₃ tel que défini à l'une quelconque des revendications 1 à 3 ;
le rapport molaire alcoxysilane(s) de formule (R⁶O)₃Si-CH₂-CH₂-Si(OR7)₃/ alcoxysilane(s) de formule Si(OR¹)₄, R²Si(OR³)₃ ou R⁴Si(OR⁵)₃ étant compris entre 1/1,25 et 1/50 ;
c₂) ajouter au mélange de l'étape (a₂) ou éventuellement de l'étape (b₂) de l'eau puis un acide ;
d₂) mettre en forme le sol obtenu suite à l'étape (c₂) pour obtenir le matériau sol-gel comprenant au moins une molécule-sonde.

6. Procédé de préparation d'un matériau sol-gel poreux selon la revendication 1, comprenant les étapes successives suivantes consistant à :
- mélanger un seul alcoxysilane de formule (R⁶O)₃Si-CH₂-CH₂-Si(OR⁷)₃ tel que défini à la revendication 1 ou 3 avec un solvant et au moins une molécule-sonde choisie dans le groupe constitué par l'acide croconique, le DMABA, le DMACA, le MOB et le MON ;
- ajouter au mélange ainsi obtenu de l'eau puis un acide ;
- mettre en forme le sol ainsi obtenu pour obtenir le matériau sol-gel comprenant au moins une molécule-sonde.

7. Procédé selon l'une quelconque des revendications 4 à 6, **caractérisé en ce que** ledit solvant est choisi dans le groupe constitué par un alcool tel que le méthanol, l'éthanol, le propanol ou le butanol, l'acétone, le formamide, la méthyléthylcétone, le chloroforme, le dichlorométhane, l'acide acétique et leurs mélanges.

8. Procédé selon l'une quelconque des revendications 4 à 7, **caractérisé en ce que** ledit acide est choisi dans le groupe constitué par un acide organique, un acide inorganique et un anhydride d'acide.

9. Procédé selon l'une quelconque des revendications 4 à 8, **caractérisé en ce que** le rapport molaire alcoxysilanes /solvant/eau est compris entre 1/2/4 et 1/20/10, notamment entre 1/4/4 et 1/10/6, et, en particulier, de 1/5/4,

10. Utilisation d'un matériau sol-gel poreux comprenant au moins une molécule-sonde selon l'une quelconque des revendications 1 à 3 ou susceptible d'être préparé par un procédé de préparation selon l'une quelconque des revendications 4 à 9 pour piéger et/ou détecter et éventuellement quantifier au moins un composé chimique,

11. Utilisation selon la revendication 10, **caractérisée en ce que** ledit composé chimique est choisi dans le groupe constitué par l'indole et ses dérivés, l'urobilinogène, la porphobilinogène, les pyrroles, les amines primaires et notamment les amines primaires aromatiques, l'acide para-aminobenzoïque, l'hydrazine, la 4-éthoxyphénylurée (ou dulcine), la 5-nitro-2-propoxyaniline (ou P-4000), le nitrate d'urée, le dipyrone, les dérivés de sérotonine, les amines synopathomimétiques, les herbicides, les acides nucléiques et Fe³⁺.

12. Procédé pour piéger et/ou détecter et éventuellement quantifier au moins un composé chimique tel que défini à la revendication 11 comprenant les étapes consistant à :
i) mettre en contact un flux susceptible de contenir au moins un composé chimique tel que défini à la revendication 11 avec un matériau sol-gel poreux comprenant au moins une molécule-sonde tel que défini à l'une quelconque des revendications 1 à 3 ;
ii) piéger et/ou détecter et éventuellement quantifier le (ou les) composé(s) chimique(s) éventuellement présent(s).

13. Procédé selon la revendication 12, **caractérisé en ce que** ledit flux est un flux gazeux ou un flux liquide.

14. Procédé selon la revendication 12 ou 13, **caractérisé en ce que** la détection de l'étape (i) est effectuée en mesurant la variation d'absorbance, de fluorescence, de luminescence, de masse ou de fréquence de résonance du matériau tel que défini à l'une quelconque des revendications 1 à 3 lorsqu'il est exposé à un flux contenant le (ou les) composé(s) chimique(s) tel(s) que défini (s) à la revendication 11.

15. Système de piégeage et/ou de détection comprenant au moins un matériau sol-gel poreux comprenant au moins une molécule-sonde selon l'une quelconque des revendications 1 à 3.

16. Système de piégeage et/ou de détection selon la revendication 15, **caractérisé en ce qu'**il comprend en outre au moins un élément choisi dans le groupe constitué par un système millifluidique pour l'écoulement gazeux; une chambre d'exposition éventuellement étanche, munie de fenêtres optiques et éventuellement d'ouvertures pour le système millifluidique dans laquelle le matériau sol-gel poreux selon l'une quelconque des revendications 1 à 3 est placé et mis en contact avec le flux à analyser ; un système de maintien du matériau sol-gel poreux selon l'une quelconque des revendications 1 à 3 ; un dispositif d'irradiation ; un système optique de collimation et de focalisation de la lumière d'analyse ; des moyens aptes à véhiculer la lumière ; et un détecteur.

## Patentansprüche

1. Poröses Sol-Gel-Material, umfassend wenigstens ein Sondenmolekül, das ausgewählt ist aus der Gruppe gebildet durch Croconsäure, *p-*Dimethylaminobenzaldehyd (DMABA), *p*-Dimethylaminocinnamaldehyd (DMACA), *p-*Methoxybenzaldehyd (MOB) und 4-Methoxy-1-Naphtaldehyd (MON), **dadurch gekennzeichnet, dass** das Sol-Gel-Material einen intrinsischen pH kleiner als 1 und insbesondere einen intrinsischen pH kleiner als 0 hat,
und **dadurch gekennzeichnet, dass** das Sol-Gel-Material im Wesentlichen hergestellt ist ausgehend von:
(1) einer Mischung:
- von wenigstens einem Alkoxysilan der Formel Si(OR¹)₄ oder R²Si(OR³)₃, wobei R¹, R² und R³, die identisch oder verschieden sind, eine Alkylgruppe mit 1 bis 6 Kohlenstoffatomen repräsentieren, und
- von wenigstens einem Alkoxysilan der Formel R⁴Si(OR⁵)₃ oder (R⁶O)₃Si-CH₂-CH₂-Si(OR⁷)₃, wobei R⁴ eine substituierte Alkylgruppe mit 1 bis 6 Kohlenstoffatomen repräsentiert, und R⁵, R⁶ und R⁷, die identisch oder verschieden sind, eine Alkylgruppe mit 1 bis 6 Kohlenstoffatomen repräsentieren,
wobei das molare Verhältnis Alkoxysilan(e) der Formel Si(OR¹)₄ oder R²Si(OR³)₃ / Alkoxysilan(e) der Formel R⁴Si(OR⁵)₃ oder (R⁶O)₃Si-CH₂-CH₂-Si(OR⁷)₃ zwischen 1/0,02 und 1/0,80 enthalten ist; oder
(2) einem einzigen Alkoxysilan der Formel (R⁶O)₃Si-CH₂-CH₂-Si(OR⁷)₃, wobei R⁶ und R⁷, die identisch oder verschieden sind, eine Alkylgruppe mit 1 bis 6 Kohlenstoffatomen repräsentieren; oder
(3) einer Mischung:
- wenigstens eines Alkoxysilans der Formel (R⁶O)₃Si-CH₂-CH₂-Si(OR⁷)₃, wobei R⁶ und R⁷, die identisch oder verschieden sind, eine Alkylgruppe mit 1 bis 6 Kohlenstoffatomen repräsentieren, und
- wenigstens einem Alkoxysilan der Formel Si(OR¹)₄, R²Si(OR³)₃, oder R⁴Si(OR⁵)₃, wobei R¹, R² und R³, die identisch oder verschieden sind, eine Alkylgruppe mit 1 bis 6 Kohlenstoffatomen repräsentieren, R⁴ eine substituierte Alkylgruppe mit 1 bis 6 Kohlenstoffatomen repräsentiert, und R⁵ eine Alkylgruppe mit 1 bis 6 Kohlenstoffatomen repräsentiert,
wobei das molare Verhältnis Alkoxysilan(e) der Formel (R⁶O)₃Si-CH₂-CH₂-Si(OR⁷)₃/Alkoxysilan(e) der Formel Si(OR¹)₄, R²Si(OR³)₃ oder R⁴Si(OR⁵)₃ zwischen 1/1,25 und 1/50 enthalten ist;
wobei R⁴ eine Alkylgruppe mit 1 bis 6 Kohlenstoffatomen ist, substituiert mit einem oder mehreren Elementen , das/die ausgewählt ist/sind aus der Gruppe gebildet durch ein Halogen, ein Radikal -NH₂, ein Radikal -NHR⁸, wobei R⁸ eine Alkylgruppe mit 1 bis 6 Kohlenstoffatomen repräsentiert, einem Radikal -COOH, einem Radikal - COOR⁹, wobei R⁹ eine Alkylgruppe mit 1 bis 6 Kohlenstoffatomen repräsentiert.

2. Sol-Gel-Material nach Anspruch 1, **dadurch gekennzeichnet, dass** das Alkoxysilan der Formel Si(OR¹)₄ oder R²Si(OR³)₃ ausgewählt ist aus der Gruppe gebildet durch Tetramethoxysilan (TMOS, Si(OCH₃)₄), Tetraethoxysilan (TEOS, Si(OC₂H₅)₄), Tetrapropoxysilan (TPOS, Si(OC₃H₇)₄), Tetrabutoxysilan (TBOS, Si(OC₄H₉)₄), Methyltrimethoxysilan (MTMOS, (CH₃)Si(OCH₃)₃), Ethyltrimethoxysilan (ETMOS, (C₂H₅)Si(OCH₃)₃), Propyltrimethoxysilan (PTMOS, (C₃H₇)Si(OCH₃)₃), Methyltriethoxysilan (MTEOS, (CH₃)Si(OC₂H₅)₃), Ehtyltriethoxysilan (ETEOS, (C₂H₅)Si(OC₂H₅)₃), Propyltriethoxysilam (PTEOS, (C₃H₇)Si(OC₂H₅)₃) und deren Mischungen.

3. Sol-Gel-Material nach Anspruch 1 oder 2, **dadurch gekennzeichnet, dass** das Alkoxysilan der Formel R⁴Si(OR⁵)₃ oder (R⁶O)₃Si-CH₂-CH₂-Si(OR⁷)₃ ausgewählt ist aus der Gruppe gebildet durch 3-Aminopropyltriethoxysilan (APTES, Si(C₃H₆NH₂)(OC₂H₅)₃), 3-Aminopropyltrimethoxysilan (APTMS, Si(C₃H₆NH₂)(OCH₃)₃), (3-(Methylamino)propyl)trimethoxysilan (Si(C₃H₆NHCH₃)(OCH₃)₃), 3-Carboxypropyltriethoxysilan (Si(C₃H₆CO₂H)(OC₂H₅)₃), 3-Carboxypropyltrimethoxysilan (Si(C₃H₆CO₂H)(OCH₃)₃), 1,2-Bis(triethoxysilyl)ethan ((OC₂H₅)₃Si-CH₂-CH₂-Si(OC₂H₅)₃), 1,2-Bis(trimethoxysilyl)ethan ((OCH₃)₃Si-CH₂-CH₂-Si(OCH₃)₃), (3,3,3-Trichloropropyl)triethoxysilan (Si(C₂H₅CCl₃)(OC₂H₅)₃) und 3,3,3-Trifluoropropyl-Trimethoxysilan (Si(C₂H₅CF₃)(OCH₃)₃) und deren Mischungen.

4. Verfahren zur Herstellung eines porösen Sol-Gel-Materials nach einem der Ansprüche 1 bis 3, umfassend die folgenden sukzessiven Schritte:
a₁) Mischen von wenigstens einem Alkoxysilan der Formel Si(OR¹)₄ oder R²Si(OR³)³wie in Anspruch 1 oder 2 definiert, mit einem Lösungsmittel und wenigstens einem Sondenmolekül, das ausgewählt ist aus der Gruppe gebildet durch Croconsäure, DMABA, DMACA, MOB und MON;
b₁) Hinzufügen, zu der Mischung des Schritts (a₁), wenigstens eines Alkoxysilans der Formel R⁴Si(OR⁵)₃ oder (R⁶O)₃Si-CH₂-CH₂-Si(OR⁷)₃ wie in Anspruch 1 oder 3 definiert;
wobei das molare Verhältnis Alkoxysilan(e) der Formel Si(OR¹)₄ oder R²Si(OR³)₃ / Alkoxysilan(e) der Formel R⁴Si(OR⁵)₃ oder (R⁶O)₃Si-CH₂-CH₂-Si(OR⁷)₃ zwischen 1/0,02 und 1/0,80 enthalten ist;
c₁) Hinzufügen, zu der Mischung des Schritts (b₁), von Wasser und anschließend von einer Säure;
d₁) Formen des Sols, das im Anschluss an den Schritt (c₁) erhalten wird, um das Sol-Gel-Material zu erhalten, das wenigstens ein Sondenmolekül enthält.

5. Verfahren zur Herstellung eines porösen Sol-Gel-Materials nach Anspruch 1, umfassend die folgenden sukzessiven Schritte:
a₂) Mischen von wenigstens einem Alkoxysilan der Formel (R⁶O)₃Si-CH₂-CH₂-Si(OR⁷)₃ wie in Anspruch 1 oder 3 definiert, mit einem Lösungsmittel und wenigstens einem Sondenmolekül, das ausgewählt ist aus der Gruppe gebildet durch Croconsäure, DMABA, DMACA, MOB und MON;
b₂) gegebenenfalls Hinzufügen, zu der Mischung des Schritts (a₂), von wenigstens einem Alkoxysilan der Formel Si(OR¹)₄, R²Si(OR³)₃ oder R⁴Si(OR⁵)₃ wie in einem der Ansprüche 1 bis 3 definiert;
wobei das molare Verhältnis Alkoxysilan(e) der Formel (R⁶O)₃Si-CH₂-CH₂-Si(OR⁷)₃/Alkoxysilan(e) der Formel Si(OR¹)₄, R²Si(OR³)₃ oder R⁴Si(OR⁵)₃ zwischen 1/1,25 und 1/50 enthalten ist;
C₂) Hinzufügen, zu der Mischung des Schritts (a₂) oder gegebenenfalls des Schritts (b₂), von Wasser und anschließend von einer Säure;
d₂) Formen des Sols, das im Anschluss an Schritt (C₂) erhalten wird, um das Sol-Gel-Material zu erhalten, das wenigstens ein Sondenmolekül enthält.

6. Verfahren zur Herstellung eines porösen Sol-Gel-Materials nach Anspruch 1, umfassend die folgenden sukzessiven Schritte:
- Mischen eines einzigen Alkoxysilans der Formel (R⁶O)₃Si-CH₂-CH₂-Si(OR⁷)₃ wie in Anspruch 1 oder 3 definiert, mit einem Lösungsmittel und wenigstens einem Sondenmolekül, das ausgewählt ist aus der Gruppe gebildet durch Croconsäure, DMABA, DMACA, MOB und MON;
- Hinzufügen, zu der derart erhaltenen Mischung, von Wasser und anschließend von einer Säure;
- Formen des derart erhaltenen Sols, um das Sol-Gel-Material zu erhalten, das wenigstens ein Sondenmolekül enthält.

7. Verfahren nach einem der Ansprüche 4 bis 6, **dadurch gekennzeichnet, dass** das Lösungsmittel ausgewählt ist aus der Gruppe gebildet durch einen Alkohol wie zum Beispiel Methanol, Ethanol, Propanol oder Butanol, Aceton, Formamid, Methylethylceton, Chloroform, Dichloromethan, Essigsäure und deren Mischungen.

8. Verfahren nach einem der Ansprüche 4 bis 7, **dadurch gekennzeichnet, dass** die Säure ausgewählt wird aus der Gruppe gebildet durch eine organische Säure, eine anorganische Säure und ein Säureanhydrid.

9. Verfahren nach einem der Ansprüche 4 bis 8, **dadurch gekennzeichnet, dass** das molare Verhältnis Alkoxysilane/Lösungsmittel/Wasser enthalten ist zwischen 1/2/4 und 1/20/10, insbesondere zwischen 1/4/4 und 1/10/6, und speziell 1/5/4.

10. Verwendung eines porösen Sol-Gel-Materials, das wenigstens ein Sondenmolekül enthält, nach einem der Ansprüche 1 bis 3, oder das herstellbar ist mittels eines Herstellungsverfahrens nach einem der Ansprüche 4 bis 9, zum Einfangen und/oder Detektieren und gegebenenfalls Quantifizieren wenigstens einer chemischen Verbindung.

11. Verwendung nach Anspruch 10, **dadurch gekennzeichnet, dass** die chemische Verbindung ausgewählt ist aus der Gruppe gebildet durch Indol und seine Derivate, Urobilinogen, Porphobilinogen, die Pyrrole, die primären Amine und insbesondere die primären aromatischen Amine, Para-Aminobenzolsäure, Hydrazin, 4-Ethoxyphenylurea (oder Dulcin), 5-Nitro-2-Propoxyanilin (oder P-4000), Ureanitrat, Dipyron, die Derivate von Serotonin, die synopathomimetischen Amine, die Herbizide, die Nukleinsäuren und Fe³⁺.

12. Verfahren zum Einfangen und/oder Detektieren und gegebenenfalls Quantifizieren wenigstens einer chemischen Verbindung wie in Anspruch 11 definiert, umfassend die folgenden Schritte:
i) Inkontaktbringen eines Flusses, der dazu ausgelegt ist, wenigstens eine chemische Verbindung wie in Anspruch 11 definiert zu enthalten, mit einem porösen Sol-Gel-Material, das wenigstens ein Sondenmolekül enthält, wie in einem der Ansprüche 1 bis 3 definiert;
ii) Einfangen und/oder Detektieren und gegebenenfalls Quantifizieren der gegebenenfalls vorhandenen chemischen Verbindung (en).

13. Verfahren nach Anspruch 12, **dadurch gekennzeichnet, dass** der Fluss ein Gasfluss oder ein Flüssigkeitsfluss ist.

14. Verfahren nach Anspruch 12 oder 13, **dadurch gekennzeichnet, dass** die Detektion des Schritts (i) durchgeführt wird, indem man die Variation der Absorption, der Fluoreszenz, der Lumineszenz, der Masse oder der Resonanzfrequenz des Materials wie in einem der Ansprüche 1 bis 3 definiert misst, wenn es einem Fluss ausgesetzt wird, der die chemische(n) Verbindung(en) wie in Anspruch 11 definiert enthält.

15. System zum Einfangen und/oder zum Erfassen, umfassend wenigstens ein poröses Sol-Gel-Material, das wenigstens ein Sondenmofekül gemäß einem der Ansprüche 1 bis 3 enthält.

16. System zum Einfangen und/oder zum Detektieren nach Anspruch 15, **dadurch gekennzeichnet, dass** es ferner wenigstens ein Element enthält, das ausgewählt ist aus der Gruppe gebildet durch ein Müllifluidsystem für Gasströmung, eine gegebenenfalls dichte Expositionskammer, die mit optischen Fenstern und gegebenenfalls Öffnungen für das Millifluidsystem ausgestattet ist, in der das poröse Sol-Gel-Material nach einem der Ansprüche 1 bis 3 platziert und in Kontakt mit dem zu analysierenden Fluss gebracht ist, ein System zum Halten des porösen Sol-Gel-Materials nach einem der Ansprüche 1 bis 3, eine Bestrahlungsvorrichtung, ein optisches System zum Kollimieren und zum Fokussieren des Analyselichts, Mittel zur Führung des Lichts sowie einen Detektor.

## Claims

1. Porous sol-gel material comprising at least one probe molecule chosen from the group consisting of croconic acid, *p*-dimethylaminobenzaldehyde (DMABA), p-dimethylaminocinnamaldehyde (DMACA), *p*-methoxybenzaldehyde (MOB) and 4-methoxy-1-naphtaldehyde (MON) **characterized in that** said sol-gel material has an intrinsic pH lower than 1 and notably an intrinsic pH lower than 0 and **characterized in that** said sol-gel material is essentially prepared from:
(1) a mixture of :
- at least one alkoxysilane of formula Si(OR¹)₄ or R²Si(OR³)₃ wherein R¹, R² and R³, identical or different, are an alkyl group with 1 to 6 carbon atoms, and
- at least one alkoxysilane of formula R⁴Si(OR⁵)₃ or (R⁶O) ₃Si-CH₂₋CH₂-Si(OR⁷)₃ wherein R⁴ is a substituted alkyl group with 1 to 6 carbon atoms, and R⁵, R⁶ and R⁷, identical or different, are an alkyl group with 1 to 6 carbon atoms ;
the molar ratio of alkoxysilane(s) of formula Si (OR¹)₄ or R²Si(OR³)₃/ alkoxysilane (s) of formula R⁴Si (OR⁵)₃ or (R⁶O)₃Si-CH₂-CH₂-Si(OR⁷)₃ being between 1:0.02 and 1:0.80; or
(2) a single alkoxysilane of formula (R⁶O)₃Si-CH₂-CH₂-Si(OR⁷)₃ wherein R⁶ and R⁷, identical or different, are an alkyl group with 1 to 6 carbon atoms ; or
(3) a mixture of:
- at least one alkoxysilane of formula (R⁶O)₃Si-CH₂-CH₂-Si(OR⁷)₃ wherein R⁶ and R⁷, identical or different, are an alkyl group with 1 to 6 carbon atoms, and
- at least one alkoxysilane of formula Si(OR¹)₄, R²Si(OR³)₃ or R⁴Si(OR⁵)₃ wherein R¹, R² and R³, identical or different, are an alkyl group with 1 to 6 carbon atoms, R⁴ is a substituted alkyl group with 1 to 6 carbon atoms, and R⁵ is an alkyl group with 1 to 6 carbon atoms;
the molar ratio of alkoxysilane(s) of formula (R⁶O)₃Si-CH₂-CH₂-Si(OR⁷)₃/ alkoxysilane (s) of formula Si(OR¹)₄, R²Si(OR³)₃ or R⁴Si(OR⁵)₃ being between 1:1,25 and 1:50 ;
wherein R⁴ is an alkyl group with 1 to 6 carbon atoms substituted by one or more elements chosen from the group consisting of a halogen, a -NH₂ radical, a -NHR⁸ radical where R⁸ is an alkyl group with 1 to 6 carbon atoms, a -COOH radical, a -COOR⁹ radical where R⁹ is an alkyl group with 1 to 6 carbon atoms."

2. Sol-gel material according to claim 1, **characterized in that** said alkoxysilane of formula Si(OR¹)₄ or R²Si(OR³)₃ is chosen from the group consisting of tetramethoxysilane (TMOS, Si(OCH₃)₄), tetraethoxysilane (TEOS, Si(OC₂H₅)₄), tetrapropoxysilane (TPOS, Si(OC₃H₇)₄), tetrabutoxysilane (TBOS, Si(OC₄H₉)₄), methyltrimethoxysilane (MTMOS, (CH₃)Si(OCH₃)₃), ethyltrimethoxysilane (ETMOS, (C₂H₅)Si(OCH₃)₃), propyltrimethoxysilane (PTMOS, (C₃H₇)Si(OCH₃)₃), methyltriethoxysilane (MTEOS, (CH₃)Si(OC₂H₅)₃), ethyltriethoxysilane (ETEOS, (C₂H₅)Si(OC₂H₅)₃), propyltriethoxysilane (PTEOS, (C₃H₇)Si(OC₂H₅)₃) and mixtures thereof.

3. Sol-gel material according to claim 1 or 2, **characterized in that** said alkoxysilane of formula R⁴Si(OR⁵)₃ or (R⁶O)₃Si-CH₂-CH₂-Si(OR⁷)₃ is chosen from the group consisting of 3-aminopropyltriethoxysilane (APTES, Si(C₃H₆NH₂)(OC₂H₅)₃), 3-aminopropyltrimethoxysilane (APTMS, Si(C₃H₆NH₂)(OCH₃)₃), (3-(methylamino)propyl)trimethoxysilane (Si(C₃H₆NHCH₃) (OCH₃)₃), 3-carboxypropyltriethoxysilane (Si(C₃H₆CO₂H)(OC₂H₅)₃), 3-carboxypropyltrimethoxysilane (Si(C₃H₆CO₂H)(OCH₃)₃), 1,2-bis(triethoxysilyl)ethane ((OC₂H₅)₃Si-CH₂-CH₂-Si(OC₂H₅)₃), 1,2-bis (trimethoxysilyl) ethane ((OCH₃)₃Si-CH₂-CH₂-Si(OCH₃)₃), (3,3,3-trichloropropyl)triethoxysilane (Si(C₂H₅CCl₃)(OC₂H₅)₃) and 3,3,3-trifluoropropyltrimethoxysilane (Si(C₂H₅CF₃)(OCH₃)₃) and mixtures thereof.

4. Method for preparing a porous sol-gel material according to any of claims 1 to 3, comprising the following successive steps of:
a₁) mixing at least one alkoxysilane of formula Si(OR¹)₄ or R²Si(OR³)₃ as defined in claim 1 or 2 with a solvent and at least one probe molecule chosen from the group consisting of croconic acid, DMABA, DMACA, MOB and MON;
b₁) adding to the mixture of step (a₁) at least one alkoxysilane of formula R⁴Si(OR⁵)₃ or (R⁶O)₃Si-CH₂-CH₂-Si(OR⁷)₃ as defined in claim 1 or 3;
the molar ratio of alkoxysilane(s) of formula Si(OR¹)₄ or R²Si(OR³)₃/ alkoxysilane (s) of formula R⁴Si (OR⁵)₃ or (R⁶O)₃Si-CH₂-CH₂-Si(OR⁷)₃ being between 1:0.02 and 1:0.80;
c₁) adding to the mixture of step (b₁) water and then an acid;
d₁) shaping the sol obtained after step (c₁) to obtain the sol-gel material containing at least one probe molecule.

5. Method for preparing a porous sol-gel material according to claim 1, comprising the following successive steps of:
a₂) mixing at least one alkoxysilane of formula (R⁶O)₃Si-CH₂-CH₂-Si(OR⁷)₃ as defined in claim 1 or 3 with a solvent and at least one probe molecule chosen from the group consisting of croconic acid, DMABA, DMACA, MOB and MON ;
b₂) optionally adding to the mixture of step (a₂) at least one alkoxysilane of formula Si(OR¹)₄, R²Si(OR³)₃ or R⁴Si(OR⁵)₃ as defined in any of claims 1 to 3;
the molar ratio of alkoxysilane(s) of formula (R⁶O)₃Si-CH₂-CH₂-Si(OR⁷)₃/ alkoxysilane (s) of formula Si(OR¹)₄, R²Si(OR³)₃ or R⁴Si(OR⁵)₃ being between 1:1,25 and 1:50 ;
C₂) adding to the mixture of step (a₂) or optionally of step (b₂) water and then an acid;
d₂) shaping the sol obtained after step (C₂) to obtain the sol-gel material containing at least one probe molecule.

6. Method for preparing a porous sol-gel material according to claim 1, comprising the following successive steps of:
- mixing one single alkoxysilane of formula (R⁶O)₃Si-CH₂-CH₂-Si(OR⁷)₃ as defined in claim 1 or 3 with a solvent and at least one probe molecule chosen from the group consisting of croconic acid, DMABA, DMACA, MOB and MON ;
- adding to the mixture thus obtained water and then an acid;
- shaping the sol thus obtained to obtain the sol-gel material containing at least one probe molecule.

7. Method according to any of claims 4 to 6, **characterized in that** said solvent is chosen from the group consisting of an alcohol such as methanol, ethanol, propanol or butanol, acetone, formamide, methylethylketone, chloroform, dichloromethane, acetic acid and mixtures thereof.

8. Method according to any of claims 4 to 7, **characterized in that** said acid is chosen from the group consisting of an organic acid, an inorganic acid and an acid anhydride.

9. Method according to any of claims 4 to 8, **characterized in that** the molar ratio of alkoxysilane(s)/solvent/water is between 1:2:4 and 1:20:10, notably between 1:4:4 and 1:10:6, and in particular it is 1:5:4

10. Use of a porous sol-gel material containing at least one probe molecule according to any of claims 1 to 3 or which may be prepared using a preparation method according to any of claims 4 to 9 for trapping and/or detecting and optionally quantifying at least one chemical compound.

11. Use according to claim 10, **characterized in that** said chemical compound is chosen from the group consisting of indole and its derivatives, urobilinogen, porphobilinogen, pyrroles, primary amines and in particular the aromatic primary amines, para-aminobenzoic acid, hydrazine, 4-ethoxyphenylurea (or dulcin), 5-nitro-2-propoxyaniline (or P-4000), urea nitrate, dipyrone, the derivatives of serotonin, the synopathomimetic amines, herbicides, nucleic acids and Fe³⁺.

12. Method for trapping and/or detecting and optionally quantifying at least one chemical compound as defined in claim 11 comprising the steps of:
i) contacting a flow able to contain at least one chemical compound as defined in claim 11 with a porous sol-gel material containing at least one probe molecule such as defined in any of claims 1 to 3;
ii) trapping and/or detecting and optionally quantifying the chemical compound(s) which may be present.

13. Method according to claim 12 **characterized in that** said flow is a gas flow or a liquid flow.

14. Method according to claim 12 or 13, **characterized in that** the detection at step (i) is conducted by measuring the variation in absorbance, fluorescence, luminescence, mass or resonance frequency of the material as defined in any of claims 1 to 3 when it is exposed to a flow containing the chemical compound(s) as defined in claim 11.

15. Trapping and/or detection system comprising at least one porous sol-gel material containing at least one probe molecule according to any of claims 1 to 3.

16. Trapping and/or detection system according to claim 15, **characterized in that** it further comprises at least one element chosen from the group consisting of a millifluidic system for gas flow; an exposure chamber optionally sealed, provided with optical windows and optionally with openings for the millifluidic system in which the porous sol-gel material according to any of claims 1 to 3 is placed and contacted with the flow to be analysed; a system for holding the porous sol-gel material according to any of claims 1 to 3; an irradiation device; an optical system for collimating and focusing analytical light; means capable of conveying the light; and a detector.
